# EUROPEAN PATENT APPLICATION

(11) **EP 2 521 085 A1**
(43) Date of publication of application: **07.11.2012**
(21) Application number: 10840765.1
(22) Date of filing: 24.12.2010
(51) Int. Cl.: G06Q 50/00

(54) **CHARGING SYSTEM AND METHOD FOR CONTROLLING CHARGING SYSTEM**

(30) Priority: 28.12.2009 JP 2009298751
(71) Applicant: Panasonic Corporation, Kadoma-shi Osaka 571-8501 (JP)
(72) Inventor: YOSHIMURA, Yasuo, Osaka 540-6207 (JP); KUDOH, Takahiro, Osaka 540-6207 (JP)
(74) Representative: Grünecker, Kinkeldey, Stockmair & Schwanhäusser
(86) International application number: PCT/JP2010/007498
(87) International publication number: WO 2011/080905

(57) **Abstract**

A charging system and a method for controlling the charging system are disclosed, which can perform efficient charging with limited supplied electric power when a plurality of parked electric vehicles are simultaneously charged. The charging system includes an electric power usage measuring device (2), a charging control device (3), a parked car number detecting device (4), a first charging device (5), and a second charging device (6). In a case where vehicles parked in a parking area are divided into a first vehicle group owned by individuals and a second vehicle group shared by a plurality of people, when the number of parked cars (or parking rate) of the first vehicle group is a predetermined value or more (for example, when 70% or more of the number of registered cars of the first vehicle group are parked), the first vehicle group is preferentially charged, and when the number of parked cars (or parking rate) of the first vehicle group is smaller than the predetermined value, the second vehicle group is preferentially charged.

## Description

### Technical Field

The present invention relates to a charging system and a method for controlling charging system for charging an electric vehicle, which travels with charged electric power, such as an electric car or a plug-in hybrid car.

### Background Art

In recent years, car sharing where a plurality of households share one car (or a plurality of cars) has started to become widespread. Currently, the majority of vehicles used for car sharing travel with gasoline. However, in many cases, since the distance which the vehicle travels in one use is short (for example, for shopping or picking up and dropping off), there is a high possibility that an electric vehicle such as an electric car or a plug-in hybrid car will be used in the future.

Further, if car sharing is introduced for a housing complex, rather than providing one or more parking facilities for each household, car sharing is performed and parking facilities for the entire housing complex are reduced, providing the advantage that the land area can be effectively used.

For example, at the beginning of car sharing introduction, such a system can be considered in which a parking area corresponding to one vehicle is prepared for each household and car sharing is used when a second or further vehicles are required. A resident uses their own vehicle for commuting on weekdays or trips on days off, and makes use of car sharing when their own vehicle is being used outside or is inconvenient to use.

If the frequency of use of car sharing amongst residents of the housing complex increases and the number of households which do not require their own vehicles is increased, it will be possible to reduce individual parking areas, and to increase the value of the housing complex by installing the likes of solar power generation devices or by renting out a parking area to a third party, for example.

In this way, since there are households owning their own vehicle among the households which participate in the car sharing, both individually owned vehicles and shared vehicles are present together at the housing complex. Further, the individually owned vehicle can be either an electric vehicle or a non-electric vehicle (such as gasoline cars and diesel cars). Thus, there is a possibility that at least three types of vehicles, including electric vehicles shared by a plurality of residents, electric vehicles individually owned by a resident and non-electric vehicles individually owned by a resident, are present at the housing complex. Further, a charging system which is installed in the parking area to charge these electric vehicles should have a function capable of efficiently charging many electric vehicles.

As a charging system in the related art having such a function, a charging control device as disclosed in Patent Document 1 is known, for example. This charging control device individually controls charging, from an external power source of electric storage devices which are respectively mounted on a plurality of vehicles, and includes: an electric storage state detecting unit which detects the electric storage state of the electric storage device when each vehicle and the external power source are connected; an estimated consumed power calculating unit which detects the estimated consumed power amount for each of the plurality of vehicles; a necessary charging power amount calculating unit which calculates the necessary charging power amount on the basis of the detected electric storage state and the estimated consumed power amount for each vehicle; a usage time detecting unit which detects the usage start time of each vehicle; a charging schedule creating unit which determines a charging schedule relating to the charging time and the charging power amount of each vehicle from the necessary charging amount and the usage start time; and a control unit which charges the electric storage device mounted on the vehicle on the basis of the charging schedule.

That is, a preferential electric vehicle can be determined from the necessary charging power and the charging time for the plurality of electric vehicles to create the charging schedule.

### Related Art Documents

### Patent Documents

Patent Document 1: JP-A-2009-136109

### Summary of the Invention

### Problem to be Solved by the Invention

However, since electric power supplied to a housing complex from an electric power company is limited to an allowable amount of electric power determined by a contract, if the electric power usage of the entire housing complex exceeds the allowable electric power in a case where many parked electric vehicles are simultaneously charged, the electric power supplied from the electric power company may be cut off, or electricity prices for the entire housing complex may become high depending on the contract with the electric power company.

Further, in a case where the electric power supplied from the electric power company to charging devices used for charging the electric vehicles is limited to the allowable electric power determined by the contract, if the electric power used for charging exceeds the allowable electric power in a case where plural parked electric vehicles are simultaneously charged, the electric power supplied from the electric power company may be cut off, or electricity prices for charging may become high depending on the contract with the electric power company.

In order to prevent these problems, it is necessary to perform adjustments to reduce the electric power used for charging the electric vehicles so as not to exceed the allowable electric power.

Further, for the housing complex where car sharing is performed, it is necessary to efficiently charge electric vehicles individually owned by residents and electric vehicles shared by the plurality of residents so that the residents are not inconveniently affected in their daily lives. For example, the priority of charging is determined according to living patterns of residents, usage of shared vehicles, environments of electric power available for charging, charging states of respective electric vehicles, and the like. Such a disclosure is not shown in Patent Document 1.

Accordingly, an object of the present invention is to provide a charging system and a charging system control method which are capable of performing efficient charging with limited supplied electric power when a plurality of parked electric vehicles are simultaneously charged.

### Means for Solving the Problem

A charging system of the present invention includes: parked car number detecting means for, in a case where vehicles parked in a parking area are divided into a first vehicle group owned by an individual and a second vehicle group shared by a plurality of persons, detecting the number of parked cars or a parking rate of the first vehicle group; and a charging control device configured to charge electric vehicles in the first vehicle group and the second vehicle group. The charging control device includes priority determining means for determining the priority of which one of the first vehicle group and the second vehicle group is preferentially charged according to the number of parked cars or the parking rate detected by the parked car number detecting means, and charging electric power supplying means for charging the electric vehicles according to the priority determined by the priority determining means.

According to this configuration, since the priority of which one of the first vehicle group and the second vehicle group is preferentially charged is determined according to the number of the parked cars or the parking rate of the first vehicle group and the electric vehicles are charged according to the determined priority, when the first vehicle group and the second vehicle group are connected to the respective charging devices, it is possible to perform efficient charging with limited supplied electric power.

In the above configuration, the priority determining means preferentially charges the electric vehicles of the first vehicle group when the number of parked cars or the parking rate of the first vehicle group detected by the parked car number detecting means is a predetermined value or more, and preferentially charges the electric vehicles of the second vehicle group when the number of parked cars or the parking rate of the first vehicle group is smaller than the predetermined value.

According to this configuration, since the electric vehicles of the first vehicle group are preferentially charged when the number of parked cars or the parking rate of the first vehicle group is the predetermined value or more and the electric vehicles of the second vehicle group are preferentially charged when the number of parked cars or the parking rate of the first vehicle group is smaller than the predetermined value, the charging priority in the first vehicle group and the second vehicle group is switched according to the number of parked cars or the parking rate of the first vehicle group, and thus, it is possible to perform efficient charging with limited supplied electric power.

A charging system of the present invention includes: a charging control device configured, in a case where vehicles parked in a parking area is divided into a first vehicle group owned by an individual and a second vehicle group shared by a plurality of persons, to charge electric vehicles in the first vehicle group and the second vehicle group. The charging control device includes: available electric power measuring means for measuring electric power available for charging the electric vehicles; priority determining means for determining the priority of which one of the first vehicle group and the second vehicle group is preferentially charged according to the available electric power measured by the available electric power measuring means; and charging electric power supplying means for charging the electric vehicles according to the priority determined by the priority determining means.

According to this configuration, since the electric power available for charging the electric vehicles is measured, the priority of which one of the first vehicle group and the second vehicle group is preferentially charged is determined according to the measured available electric power, and the electric vehicles are charged according to the determined priority, when the first vehicle group and the second vehicle group are connected to the respective charging devices, it is possible to perform efficient charging with limited supplied electric power.

In the above configuration, the priority determining means preferentially charges the electric vehicles of the first vehicle group when the available electric power measured by the available electric power measuring means is a predetermined value or more, and preferentially charges the electric vehicles of the second vehicle group when the available electric power measured by the available electric power measuring means is smaller than the predetermined value.

According to this configuration, since the electric vehicles of the first vehicle group are preferentially charged when the available electric power is the predetermined value or more and the electric vehicles of the second vehicle group are preferentially charged when the available electric power is smaller than the predetermined value, the charging priority in the first vehicle group and the second vehicle group is switched according to the available electric power, and thus, it is possible to perform efficient charging with limited supplied electric power.

A charging system of the present invention includes: a charging control device configured, in a case where vehicles parked in a parking area are divided into a first vehicle group owned by an individual and a second vehicle group shared by a plurality of persons, to charge electric vehicles in the first vehicle group and the second vehicle group; and timer means for counting the time or day. The charging control device includes: priority determining means for determining the priority of which one of the first vehicle group and the second vehicle group is preferentially charged according to the time or day counted by the timer means; and charging electric power supplying means for charging the electric vehicles according to the priority determined by the priority determining means.

According to this configuration, since the priority of which one of the first vehicle group and the second vehicle group is preferentially charged is determined according to the counted time or day and the electric vehicles are charged according to the priority, when the first vehicle group and the second vehicle group are connected to the respective charging devices, it is possible to perform efficient charging with limited supplied electric power.

In the above configuration, the charging system further includes at-home detecting means for detecting an at-home state of an owner for each electric vehicle of the first vehicle group, and the priority determining means charges the electric vehicle of which the owner is at home more preferentially than the electric vehicle of which the owner is not at home.

According to this configuration, since the at-home state of the owner for each electric vehicle of the first vehicle group is detected and the electric vehicle of which the owner is at home is charged more preferentially than the electric vehicle of which the owner is not at home, when the first vehicle group and the second vehicle group are connected to the respective charging devices, it is possible to perform efficient charging with limited supplied electric power.

In the above configuration, the charging system further includes storage means for storing a detection result of the at-home detecting means in association with vehicle information on the electric vehicle of the owner. When the first vehicle group is being charged, the priority determining means checks vehicle information obtained from the electric vehicle to be charged with the vehicle information stored in the storage means, obtains the detection result of the at-home detecting means corresponding to the vehicle information in a case where the corresponding vehicle information is present, and charges the electric vehicle of which the owner is at home more preferentially than the electric vehicle of which the owner is not at home.

According to this configuration, since the at-home state of the owner for each electric vehicle of the first vehicle group is detected; the detection result and the vehicle information on the electric vehicle of the owner are correspondingly stored; and when the first vehicle group is being charged, the vehicle information obtained from the electric vehicle to be charged is checked with the stored vehicle information, the detection result of the at-home detection corresponding to the vehicle information is obtained in a case where the corresponding vehicle information is present, and the electric vehicle of which the owner is at home is charged more preferentially than the electric vehicle of which the owner is not at home, when the first vehicle group and the second vehicle group are connected to the respective charging devices, it is possible to perform efficient charging with limited supplied electric power.

In the above configuration, the charging control device includes notifying means for notifying the owner of the electric vehicle of the first electric vehicle group, and the priority determining means performs notification of availability of the second vehicle group using the notifying means when the electric vehicle of the second vehicle group is charged more preferentially than the first vehicle group.

According to this configuration, since the availability of the second vehicle group is notified when the electric vehicle of the second vehicle group is charged more preferentially than the first vehicle group, the owner of the electric vehicle in the first vehicle group can be informed that the second vehicle group (shared vehicle) is completely charged and available even though the electric vehicle of the owner is not charged, for example.

A method for controlling a charging system of the invention, the charging system including parked car number detecting means for, in a case where vehicles parked in a parking area are divided into a first vehicle group owned by an individual and a second vehicle group shared by a plurality of persons, detecting the number of parked cars or a parking rate of the first vehicle group, and a charging control device configured to charge electric vehicles in the first vehicle group and the second vehicle group, includes: a priority determining step of determining the priority of which one of the first vehicle group and the second vehicle group is preferentially charged according to the number of the parked cars or the parking rate detected by the parked car number detecting means; and a charging electric power supplying step of charging the electric vehicles according to the priority determined in the priority determining step.

According to this method, since the priority of which one of the first vehicle group and the second vehicle group is preferentially charged is determined according to the number of the parked cars or the parking rate of the first vehicle group and the electric vehicles are charged according to the priority, when the first vehicle group and the second vehicle group are connected to the respective charging devices, it is possible to perform efficient charging with limited supplied electric power.

According to a fifth aspect of the invention, there is provided a program for causing a computer to execute the method for controlling the charging system.

According to this program, when the first vehicle group and the second vehicle group are connected to the respective charging devices, it is possible to perform efficient charging with limited supplied electric power.

### Advantages of the Invention

According to the present invention, when a plurality of parked electric vehicles are simultaneously charged, it is possible to perform efficient charging with limited supplied electric power.

### Brief Description of the Drawings

Fig. 1 is a diagram schematically illustrating a configuration of a charging system and its periphery according to a first embodiment of the present invention.
Fig. 2 is a block diagram schematically illustrating a configuration of the charging system according to the first embodiment of the present invention.
Fig. 3 is a diagram illustrating characteristics of the charging system in Fig. 2.
Fig. 4 is a flowchart illustrating an operation of the charging system in Fig. 2.
Fig. 5 is a flowchart illustrating an operation of the charging system in Fig. 2.
Fig. 6 is a block diagram schematically illustrating a charging system according to a second embodiment of the present invention.
Fig. 7 is a diagram illustrating characteristics of the charging system in Fig. 6.
Fig. 8 is a flowchart illustrating an operation of the charging system in Fig. 6.
Fig. 9 is a flowchart illustrating an operation of the charging system in Fig. 6.
Fig. 10 is a block diagram schematically illustrating a configuration of a charging system according to a third embodiment of the present invention.
Fig. 11 is a diagram illustrating characteristics of the charging system in Fig. 10.
Fig. 12 is a flowchart illustrating an operation of the charging system in Fig. 10.
Fig. 13 is a flowchart illustrating an operation of the charging system in Fig. 10.
Fig. 14 is a block diagram schematically illustrating a configuration of a charging system according to a fourth embodiment of the present invention.
Fig. 15 is a diagram illustrating characteristics of the charging system in Fig. 14.
Fig. 16 is a flowchart illustrating an operation of the charging system in Fig. 14.
Fig. 17 is a flowchart illustrating an operation of the charging system in Fig. 14.
Fig. 18 is a block diagram schematically illustrating a configuration of a charging system according to a fifth embodiment of the present invention.
Fig. 19 is a diagram illustrating characteristics of the charging system in Fig. 18.
Fig. 20 is a diagram illustrating characteristics of an application example of the charging system in Fig. 18.
Fig. 21 is a diagram illustrating characteristics of an application example of the charging system in Fig. 18.
Fig. 22 is a diagram illustrating characteristics of an application example of the charging system in Fig. 18.
Fig. 23 is a flowchart illustrating an operation of the charging system in Fig. 18.

### Mode for Carrying Out the invention

Hereinafter, preferred embodiments of the present invention will be described in detail with reference to the accompanying drawings.

### (First embodiment)

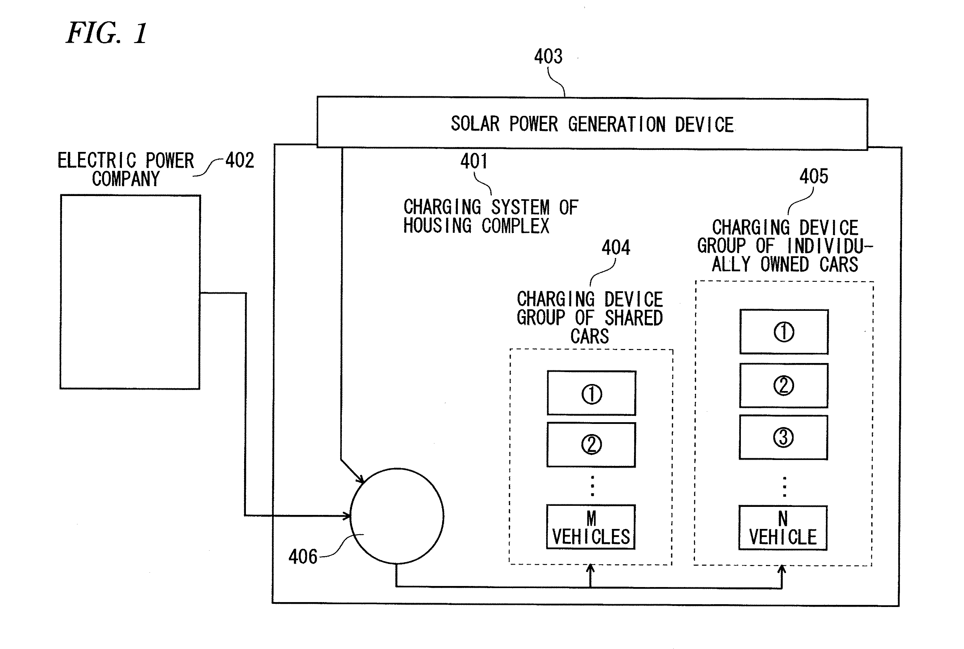

Fig. 1 is a diagram schematically illustrating a configuration of a charging system and its periphery according to a first embodiment of the present invention. In the figure, a charging system 401 is installed at a housing complex and charges electric vehicles using electric power supplied from an electric power company 402 and electric power generated by a solar power generation device 403 which is installed on a roof or the like of the housing complex.

In order to charge the electric vehicles, the charging system 401 includes a charging device group 404 which is provided to charge shared cars (M) used by residents for car sharing at the housing complex and charges electric vehicles which are parked in a car sharing parking area, and a charging device group 405 which charges electric vehicles (N) owned by individual residents parked in an individual parking area at the housing complex (generally, M<N).

Here, the electric power supplied from the electric power company 402 can be used anytime 24 hours a day as long as the electric power is in the range of electric power according to the contract with the electric power company. With respect to the contract for the electric power, the form of determining an upper limit of supplied electric power by the charging system of the housing complex and the form of determining the upper limit of the supplied electric power by the entire housing complex including residence may be considered.

On the other hand, the electric power generated by the solar power generation device 403 is significantly changed according to the time, weather and season. In consideration of these electric power environments, a charging control device 406 performs control of efficient charging with the limited supplied electric power, even when the plurality of electric vehicles is simultaneously charged by the charging device group 404 of the shared cars and the charging device group 405 of individually owned cars the electric power supplied from the electric power company 402 and the solar power generation device 403 in the range which does not exceed the upper limit of the supplied electric power.

Details about the control will be described hereinafter. Firstly, in the first embodiment, the charging system of the housing complex which does not include the solar power generation device will be described. The charging system which includes the solar power generation device in the housing complex will be described in a second embodiment.

Further, in the first and second embodiments, the form will be described in which the range of the upper limit of the supplied electric power determined by the contract with the electric company is defined by the charging system. The form of determining the upper limit of the supplied electric power by the entire housing complex including residence instead of the charging system will be described in a third embodiment. In a fourth embodiment and thereafter, the charging system of solving the problems of the present invention will be described as different embodiments of the first to third embodiments.

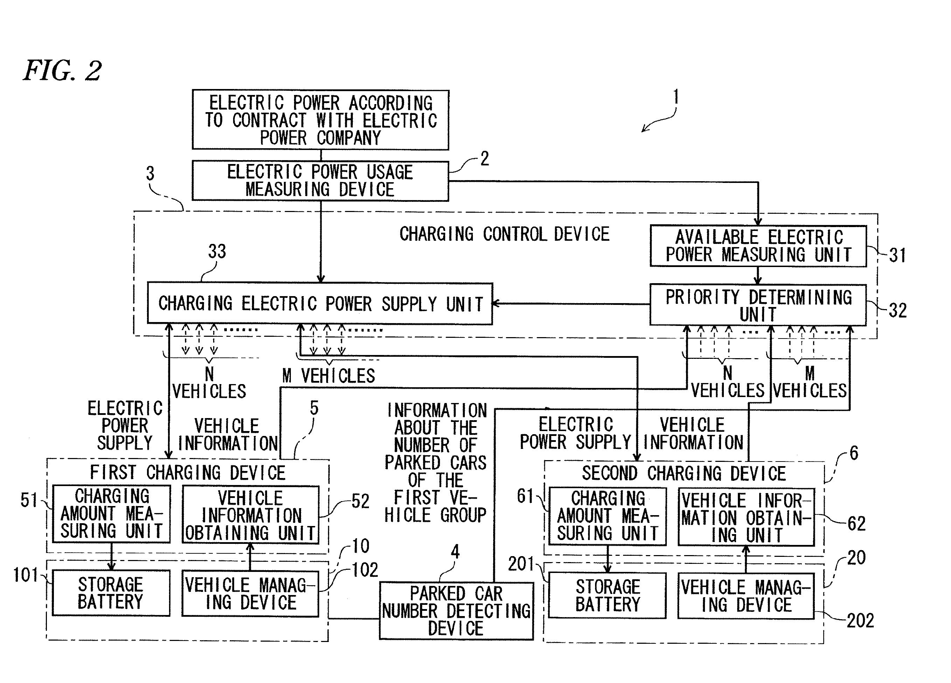

Fig. 2 is a block diagram schematically illustrating a configuration of the charging system according to the first embodiment of the present invention. In the figure, the charging system 1 according to the present embodiment includes an electric power usage measuring device 2, a charging control device 3, a parked car number detecting device 4, a first charging device 5, and a second charging device 6. In a case where vehicles parked in a parking area are divided into a first vehicle group owned by individuals and a second vehicle group shared by a plurality of persons, the charging system 1 determines the priority of which one of the first vehicle group and the second vehicle group is preferentially charged according to the number of parked cars (or parking rate) of the first vehicle group and charges the electric vehicles according to the priority.

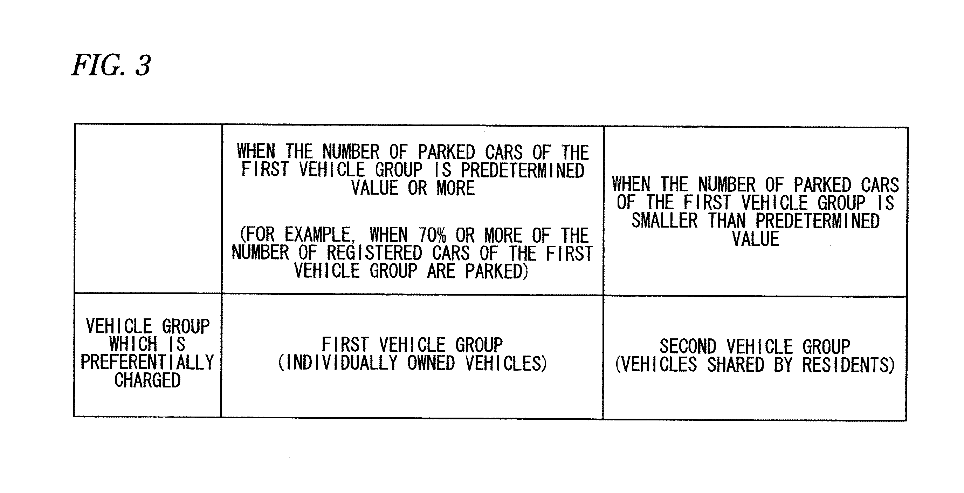

More specifically, when the number of parked cars (or parking rate) of the first vehicle group is a predetermined value X1 or more (for example, when 70% or more of the number of registered cars of the first vehicle group are parked), the first vehicle group is preferentially charged, and when the number of parked cars (or parking rate) of the first vehicle group is smaller than the predetermined value X1, the second vehicle group is preferentially charged. Fig. 3 is a diagram illustrating characteristics of the charging system according to the present embodiment.

The electric power usage measuring device 2 measures used electric power in the electric power according to the contract with the electric power company. The parked car number detecting device 4 detects the number of parked cars (or parking rate) of the first vehicle group of the N cars including an electric vehicle group owned by individuals. The charging control device 3 includes an available electric power measuring unit 31, a priority determining unit 32, and a charging electric power supply unit 33. The available electric power measuring unit 31 measures available electric power. The priority determining unit 32 determines the priority of which one of the first vehicle group and the second vehicle group is preferentially charged according to the number of parked cars (or parking rate) of the first vehicle group detected by the parking car number detecting device 4. The charging electric power supply unit 33 supplies electric power for charging the electric vehicles according to the priority determined by the priority determining unit 32.

The first charging device 5 charges an electric vehicle 10 owned by an individual by electric power supplied from the charging control device 3, and includes a charging amount measuring unit 51 and a vehicle information obtaining unit 52. The charging amount measuring unit 51 measures an amount necessary for charging from a remaining amount of a storage battery 101 which is mounted on the individually owned electric vehicle 10. The vehicle information obtaining unit 52 obtains vehicle information about a vehicle ID, charging reservation, usage reservation or the like from a vehicle managing device 102 which is mounted on the individually owned electric vehicle 10, and transmits the obtained vehicle information to the charging control device 3. Since the first charging device 5 charges one electric vehicle, the plurality of first charging devices 5 is prepared to be able to charge all the electric vehicles which form the first vehicle group.

Electricity prices of the electric power which is charged to the individually owned electric vehicle 10 by the first charging device 5 is charged from the electric power company in addition to electricity prices of the individual residence. Alternatively, the electricity prices are charged from the electric power company by an electricity contract exclusively enforced for charging except for the residence. Further, the charging electricity prices are paid off by credit card transactions or electronic money transactions including clearing means (not shown) in the first charging device 5 like at a gas station.

If the parked car number detecting device 4 is connected to the vehicle information obtaining unit 52 of the first charging device 5, it is possible to detect the parked car number (parking rate) of the electric vehicles among the first vehicle group. Vehicle detecting means (for example, infrared sensor, image recognition sensor, superposed sensor or the like for every vehicle space) may be installed in the parking area to detect the number of parked cars including non-electric vehicles (gasoline vehicles or diesel vehicles).

The storage battery 101 and the vehicle managing device 102 which manages the vehicle management information such as a vehicle ID, charging reservation, or usage reservation, as described above, are mounted on the individually owned electric vehicle 10. Further, the above-described parked car number detecting device 4 detects the parked car number (or parking rate) of the electric vehicles which belong to the first vehicle group on the basis of the vehicle ID among the vehicle information managed by the vehicle managing device 102 which is mounted on the individually owned electric vehicle 10, and transmits the detected number of parked cars (or parking rate) to the charging control device 3 as the information about the number of parked cars of the first vehicle group. Further, the electric vehicle 10 is mounted with a car navigation device or a charging state managing device of a storage battery, and may share a part of functions with the vehicle managing device 102.

The second charging device 6 charges an electric vehicle 20 shared by residents by electric power supplied from the charging control device 3, and includes a charging amount measuring unit 61 and a vehicle information obtaining unit 62. The charging amount measuring unit 61 measures an amount necessary for charging from a remaining amount of a storage battery 201 which is mounted on the electric vehicle 20 shared by the residents. The vehicle information obtaining unit 62 obtains vehicle information about a vehicle ID, charging reservation, usage reservation or the like from a vehicle managing device 202 which is mounted on the electric vehicle 20 shared by the residents, and transmits the obtained vehicle information to the charging control device 3. Since the second charging device 6 charges one electric vehicle, the plurality of second charging devices 6 is prepared to be able to charge all the electric vehicles which form the second vehicle group. The storage battery 201 and the vehicle managing device 202 which manages the vehicle management information such as a vehicle ID, charging reservation, or usage reservation, as described above, are mounted on the electric vehicle 20 shared by the residents.

An electricity bill of the electric power charged in the shared electric vehicle 20 by the second charging device 6 is firstly paid by a car sharing manager. Further, the charging electricity bill is included in a car sharing bill charged to car sharing users. The usage fee of the car sharing mainly includes a basic fee which is a membership fee (monthly fee which is mainly a fixed fee) and a fee paid for usage (usage time or distance of the shared electric vehicle). The payment process of the car sharing usage fee is involved in a car sharing management system, so that the bill can be charged to each user in association with reservation of the shared electric vehicle.

The vehicle managing devices 102 and 202 are car-mounted terminals connected to a charging reservation system (not shown) in the housing complex. Further, the vehicle managing device 202 of the shared vehicle is a car-mounted terminal connected to a car sharing management system (not shown). When a resident uses an individually owned electric vehicle, the resident accesses the charging reservation system using a personal computer or a mobile phone and inputs a time period for using the individually owned electric vehicle and a necessary travel distance. The charging reservation system calculates a time necessary for charging and electric power necessary for charging from a charging state of the individually owned electric vehicle, the necessary travel distance thereof and the time period for use, and performs reservation in the charging reservation system of the entire housing complex. Further, the charging reservation system transmits the reservation content to the car-mounted terminal of the individually owned vehicle, which is used for authentication of vehicle confirmation of the charging control device and the electric vehicle during charging.

Further, when the resident reserves the shared electric vehicle, the resident accesses the car sharing management system using the personal computer or the mobile phone and inputs a time period for using the shared vehicle and a necessary travel distance. The car sharing management system calculates a time necessary for charging and electric power necessary for charging from the charging state of the individually owned electric vehicle, the necessary travel distance thereof and the time period for use, selects an optimal vehicle from the plurality of shared vehicles under the condition, and reserves the vehicle and the charging in the car sharing management system. Further, the car sharing management system reserves the charging in cooperation with the charging reservation system of the housing complex. Further, the car sharing management system transmits the reservation content to the car-mounted terminal of the corresponding shared vehicle, which is used for authentication of the vehicle confirmation of the charging control device and the electric vehicle during charging or used for confirmation of the electric vehicle and a driver during boarding.

When the resident makes the charging reservation for the individually owned electric vehicle, in a case where the shared vehicle is available for a distance capable of being travelled and in an available time period in consideration of the time period for use and the necessary travel distance of the individually owned electric vehicle, the car sharing management system may inform the resident that the resident can use the shared vehicle. Particularly, as will be described later, when there are many individually owned vehicles to be charged while electric power used for charging the electric vehicles is limited, it is possible to perform efficient charging by guiding the resident to use the shared vehicle. Further, since the efficient charging can be performed in this way, it is possible to reduce the usage fee of the shared vehicle.

Each electric vehicle includes the car navigation device to share a part of functions with the vehicle managing device 202, and may be connected to and access the charging reservation system of the housing complex or the car sharing management system from the car navigation device.

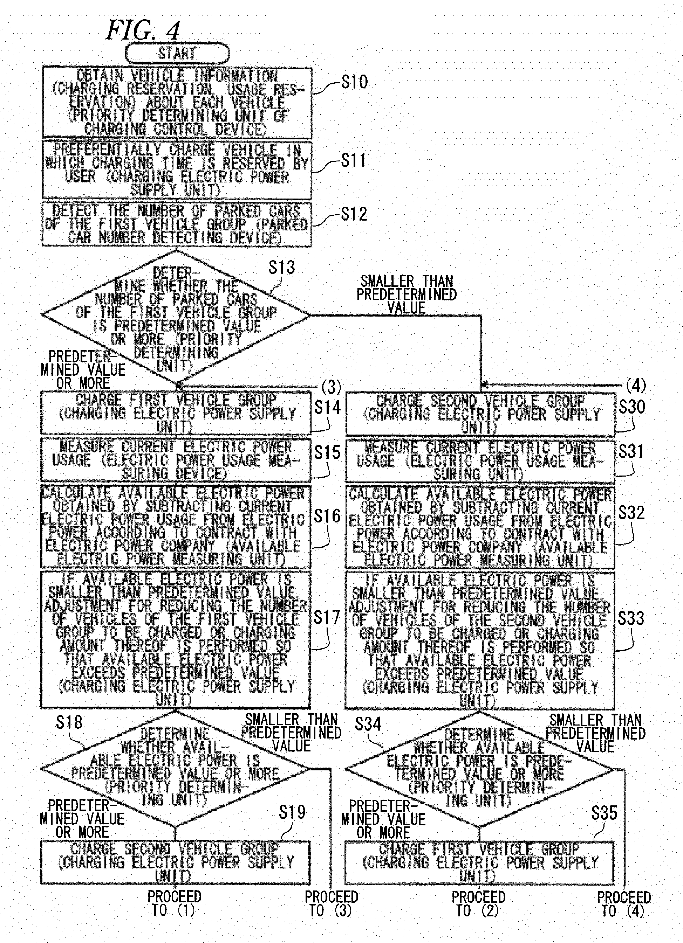

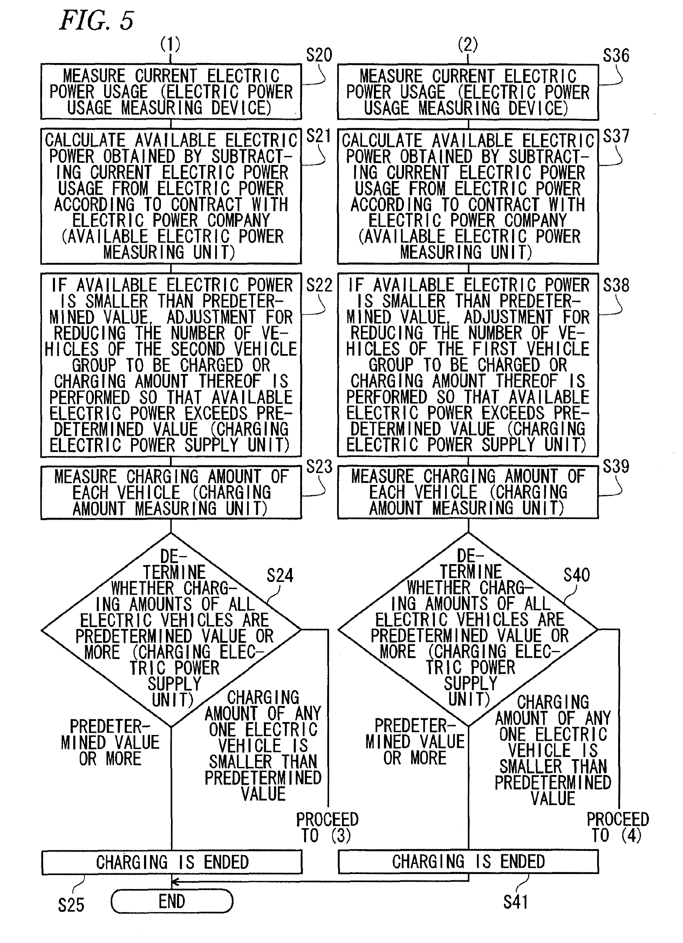

Next, an operation of the charging system 1 according to the present embodiment will be described with reference to flowcharts shown in Figs. 4 and 5. An element (for example, the charging electric power supply unit 33) which performs each step is described together with description of each step.

Firstly, vehicle information is obtained from each of the N first charging devices 5 and M second charging devices 6 (step 10, the priority determining unit 32). In the case of wired communication (power line communication through a charging line, for example), the vehicle information is obtained only from the charging device connected to the electric vehicle, and in the case of wireless communication, the vehicle information can be obtained with respect to the vehicle parked in a state where the charging device is not connected to the electric vehicle. By identifying whether the corresponding vehicle is an individually owned vehicle or a shared vehicle from the obtained vehicle information, the individually owned vehicle may not be constantly parked in a designated parking area, and the individually owned vehicle and the shared vehicle may be mixedly parked. For example, when the shared vehicle is rented out, it is possible for the resident to park the vehicle in a desired parking area.

After the vehicle information about each electric vehicle is obtained, the electric vehicle in which a charging time is reserved by a user is preferentially charged (step 11, the charging electric power supply unit 33). Thus, the individually owned electric vehicle and the shared electric vehicle which are reserved in the charging reservation system of the housing complex are charged.

Then, the number of parked cars of the first vehicle group is detected (step 12, the parked car number detecting device 4). Then, it is determined whether the number of parked cars of the detected first vehicle group is a predetermined value X1 or more (for example, when 70% or more of the number of registered cars of the first vehicle group are parked) (step 13, the priority determining unit 32). In a case where the number of parked cars of the first vehicle group is the predetermined value X1 or more, the electric vehicle 10 of the first vehicle group is charged prior to the electric vehicle 20 of the second vehicle group (step 14, the charging electric power supply unit 33). When the plurality of electric vehicles of the first vehicle group is parked, the charging is performed in the descending order of usage frequency, in the descending order of travel distance, in the descending order of charging and discharging of the storage battery, or in a similar order in the electric vehicles, over a month or year.

Further, at this time, the current electric power usage is measured (step 15, the electric power usage measuring device 2), and then available electric power obtained by subtracting the current electric power usage from electric power according to the contract with the electric power company is calculated (step 16, the available electric power measuring unit 31).

Then, if the calculated available electric power is smaller than a predetermined value P1 (for example, smaller than 20% of the contracted available electric power in the entire housing complex, or smaller than 20% of the contracted available electric power in all the charging devices in the housing complex), since the available electric power is small, in order to secure electric power necessary for charging the vehicle having the priority, adjustment for reducing the number of vehicles of the first vehicle group to be charged or the charging amount thereof is performed so that the available electric power becomes the predetermined value P1 or more (step 17, the charging electric power supply unit 33).

Here, in a case where the number of vehicles is reduced, for example, the adjustment is performed to reduce the number of vehicles one by one. After performing the adjustment, it is determined whether the available electric power becomes the predetermined value P1 or more (step 18, the priority determining unit 32). If the available electric power has not yet become the predetermined value P1 or more in this determination, since the available electric power is still small, the procedure returns to step 14, and then the processes of step 14 to step 18 are repeated until the available electric power becomes the predetermined value P1 or more. In this way, the first vehicle group, that is, the individually owned electric vehicles, is preferentially charged, and the number of vehicles of the first vehicle group to be charged or the charging amount thereof is adjusted so that the available electric power becomes the predetermined value P1 or more.

When the available electric power has the margin of the predetermined value P1 or more even though the first vehicle group is preferentially charged, the second vehicle group is charged. When the plurality of electric vehicles of the second vehicle group is parked, the charging is performed in the descending order of usage frequency, in the descending order of travel distance, in the descending order charging and discharging of the storage battery, or in a similar order in the electric vehicles, over a month or year.

If the available electric power is the predetermined value P1 or more, the electric vehicle of the second vehicle group is charged (step 19, the charging electric power supply unit 33). Further, at this time, the current electric power usage is measured (step 20, the electric power usage measuring device 2), and then the available electric power obtained by subtracting the currently used available electric power from the electric power according to the contract with the electric power company is calculated (step 21, the available electric power measuring unit 31).

Further, if the calculated available electric power is smaller than a predetermined value P2 (for example, smaller than 20% of the contracted electric power), adjustment is performed to reduce the number of cars to be charged in the second vehicle group or the charging amount thereof so that the available electric power becomes the predetermined value P2 or more (step 22, the charging electric power supply unit 33).

Then, the charging amount of each electric vehicle is measured (step 23, the charging amount measuring unit 61), and it is determined whether the charging amounts of all the electric vehicles are a predetermined value Q1 or more (for example, when a full charging state is 100, a minimum necessary charging amount is 80 or more) (step 24, the charging electric power supply unit 33). If the charging amounts of all the electric vehicles are the predetermined value Q1 or more, the charging is ended (step 25, the charging electric power supply unit 33), and if the charging amount of any one electric vehicle is smaller than the predetermined value Q1, the procedure returns to step 14, to repeat the processes of step 14 to step 24.

Thus, when the available electric power has the margin of the predetermined value P1 or more even though the first vehicle group is charged, the second vehicle group, that is, the shared electric vehicles, is charged. The number of vehicles of the first and second vehicle groups to be charged or the charging amount thereof is re-adjusted so that the available electric power becomes the predetermined value P2 or more even though the second vehicle group is charged, and then, the charging is ended with the predetermined value Q1 or more.

The predetermined values P1 and P2 are adjusted to become 20% of the contracted electric power in the above description, but may have a range or hysteresis such as 20% to 30%, or may be different from each other (for example, P1<P2), to thereby change the adjustment of the available electric power through charging in the first electric vehicle and the second electric vehicle, thereby enhancing user convenience.

On the other hand, in the determination of step 13, in a case where the number of parked cars of the first vehicle group is smaller than the predetermined value X1 (for example, when vehicles less than 70% of the number of registered cars of the first vehicle group are parked), the electric vehicle 20 of the second vehicle group is preferentially charged prior to the electric vehicle 10 of the first vehicle group (step 30, the charging electric power supply unit 33).

Further, at this time, the current electric power usage is measured (step 31, the electric power usage measuring device 2), and then the available electric power obtained by subtracting the currently used available electric power from the electric power according to the contract with the electric power company is calculated (step 32, the available electric power measuring unit 31). If the calculated available electric power is smaller than a predetermined value P3 (for example, smaller than 20% of the contracted electric power), adjustment is performed to reduce the number of cars to be charged in the second vehicle group or the charging amount thereof so that the available electric power becomes the predetermined value P3 or more (step 33, the charging electric power supply unit 33).

Here, in a case where the number of vehicles is reduced, for example, the adjustment is performed to reduce the number of vehicles one by one. After performing the adjustment, it is determined whether the available electric power becomes the predetermined value P3 or more (step 34, the priority determining unit 32). If the available electric power has not yet become the predetermined value P3 or more in this determination, since the available electric power is still small, the procedure returns to step 30, and then the processes of step 30 to step 34 are repeated until the available electric power becomes the predetermined value P3 or more.

In this way, the second vehicle group, that is, the shared electric vehicles are preferentially charged, and the number of vehicles of the first vehicle group to be charged or the charging amount thereof is adjusted so that the available electric power becomes the predetermined value P3 or more. When the available electric power has the margin of the predetermined value P3 or more even though the second vehicle group is preferentially charged, the first vehicle group is charged. If the available electric power is the predetermined value P3 or more (for example, 20% or more of the contracted electric power), the electric vehicle of the first vehicle group is charged (step 35, the charging electric power supply unit 33).

Further, at this time, the current electric power usage is measured (step 36, the electric power usage measuring device 2), and then the available electric power obtained by subtracting the currently used available electric power from the electric power according to the contract with the electric power company is calculated (step 37, the available electric power measuring unit 31). Further, if the calculated available electric power is smaller than a predetermined value P4 (for example, smaller than 20% of the contracted electric power), adjustment is performed to reduce the number of cars to be charged in the first vehicle group or the charging amount thereof so that the available electric power exceeds the predetermined value P4 (step 38, the charging electric power supply unit 33).

Further, the charging amount of each electric vehicle is measured (step 39, the charging amount measuring unit 51), and it is determined whether the charging amounts of all the electric vehicles are a predetermined value Q2 or more (for example, when a full charging state is 100, a minimum necessary charging amount is 80 or more) (step 40, the charging electric power supply unit 33). If the charging amounts of all the electric vehicles are the predetermined value Q2 or more, the charging is ended (step 41, the charging electric power supply unit 33), and if the charging amount of any one electric vehicle is smaller than the predetermined value Q2, the procedure returns to step 30, to repeat the processes of step 30 to step 40.

Thus, when the available electric power has the margin of the predetermined value P3 or more even though the second vehicle group is charged, the first vehicle group, that is, the individually owned electric vehicles are charged. The number of vehicles of the second and first vehicle groups to be charged or the charging amount thereof is re-adjusted so that the available electric power becomes the predetermined value P4 or more even though the first vehicle group is charged, and then, the charging is ended with the predetermined value Q2 or more.

The predetermined values P3 and P4 are adjusted to become 20% of the contracted electric power in the above description, but may have a range or hysteresis such as 20% to 30%, or may be different from each other (for example, P3<P4), to thereby change the adjustment of the available electric power through charging in the first electric vehicle and the second electric vehicle, thereby enhancing user convenience. Further, by differentiating the predetermined values P1 from P3, P2 from P4 and Q1 from Q2, the adjustment of the available electric power may be changed through charging when the first electric vehicles are preferentially charged and when the second electric vehicles are preferentially charged, to thereby enhance user convenience.

For example, with respect to the charging amounts of the individually owned electric vehicles, it is preferable that all the electric vehicles be charged to be the predetermined values or more, but it is preferable that the individually owned electric vehicles be charged with the equivalent supply electric power and charging speed while maintaining the equivalent storage amount, so as to prevent unfairness in the charging process. On the other hand, with respect to the charging amounts of the shared electric vehicles, it is preferable that all the electric vehicles be charged with the predetermined values, but the shared electric vehicles are prepared to have various charging amounts according to the demands (necessary travel distance) of users while differentiating the charging amounts little by little.

That is, if the charging is performed while equivalently maintaining the charging amounts of the plurality of electric vehicles, and for example, if the charging state of all the shared electric vehicles are about half, this does not satisfy the demand of a user who requires long distance travel. Thus, with respect to the plurality of shared electric vehicles, if the charging is performed while differentiating the charging states into a vehicle having a charging amount capable of a long distance travel, a vehicle having a charging amount capable of a mid-distance travel, and a vehicle of a charging amount capable of a short distance travel, it is possible to satisfy the user's demand as much as possible even during the charging.

In this way, according to the charging system 1 of the present embodiment, in a case where the vehicles parked in the parking area are divided into the first vehicle group owned by individuals, the second vehicle group shared by a plurality of persons, the charging system 1 includes the parked car number detecting device 4 which detects the number of parked cars of the first vehicle group or the parking rate thereof, and the charging control device 3 which charges the electric vehicles of the first vehicle group and the second vehicle group. Further, if the number of parked cars (or parking rate) detected by the parked car number detecting device 4 is the predetermined value or more, the charging control device 3 preferentially charges the electric vehicle of the first vehicle group, and if it is smaller than the predetermined value, the charging control device 3 preferentially charges the electric vehicle of the second vehicle group. Thus, when the plurality of parked electric vehicles is charged at the same time, it is possible to perform efficient charging with the limited supplied electric power.

That is, when the number of parked cars of the individually owned vehicles is large or the parking rate thereof is high, the individually owned electric vehicle is preferentially charged and prepared so that the resident can use their own vehicle. Further, when the number of parked cars of the individually owned vehicles is small or the parking rate thereof is low, the shared electric vehicle is preferentially charged and prepared in case the resident requires a different vehicle since their own vehicle is away from home.

### (Second embodiment)

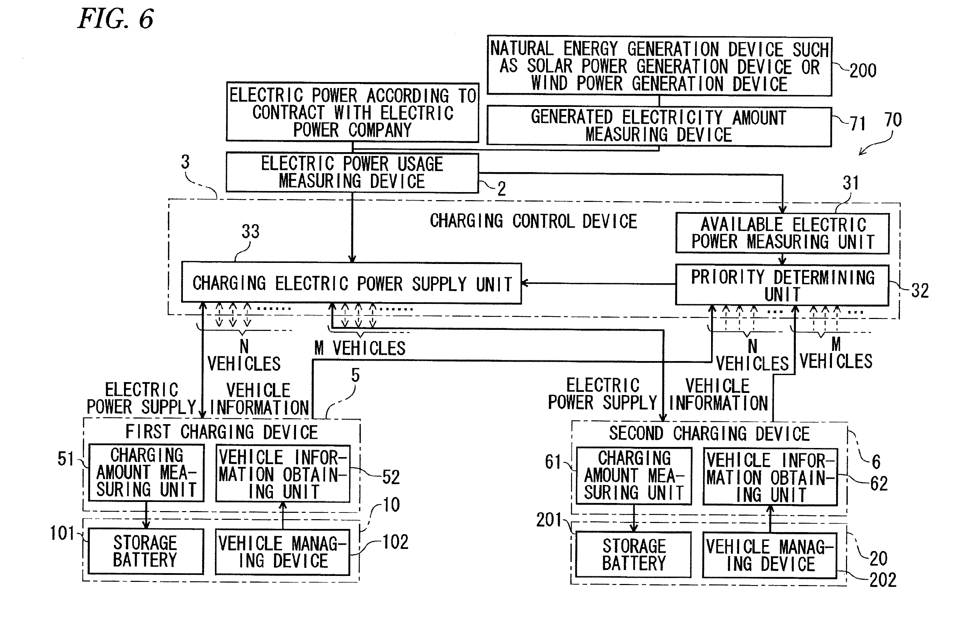

Fig. 6 is a block diagram schematically illustrating a configuration of a charging system according to a second embodiment of the present invention. In the figure, the same reference numerals are given to the same units as in the charging system in Fig. 2, and detailed description thereof will be omitted. Further, in the present embodiment, vehicles parked in a parking area are also divided into a first vehicle group owned by individuals and a second vehicle group shared by a plurality of persons.

A charging system 70 according to the present embodiment includes a generated electricity amount measuring device 71 which measures electric power generated by a natural energy generation device 200 such as a solar power generation device or a wind power generation device, in addition to the electric power usage measuring device 2, the charging control device 3, the first charging device 5 and the second charging device 6. The charging system 70 measures available electric power for charging the electric vehicles, determines the priority of which one of the first vehicle group and the second vehicle group is preferentially charged according to the measured available electric power, and charges the electric vehicles according to the priority.

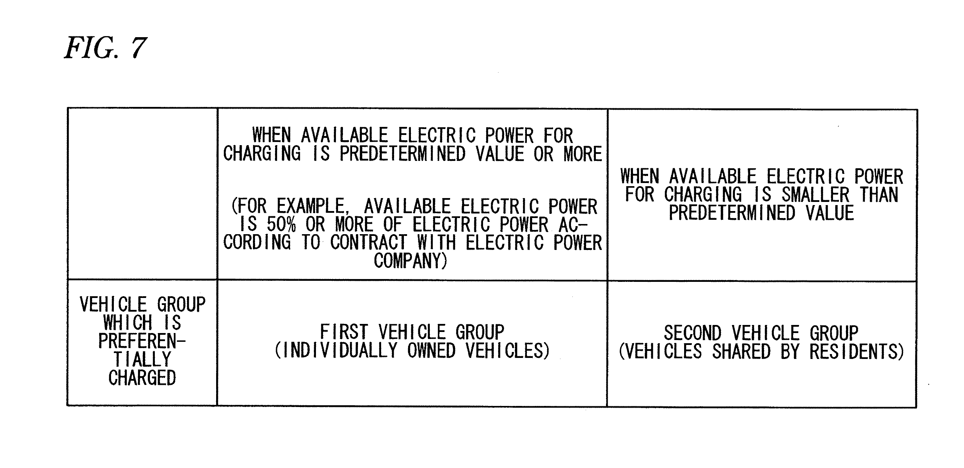

More specifically, when the measured available electric power is a predetermined value X2 or more (for example, 50% or more of the contracted available electric power in the entire housing complex or 50% or more of the contracted available electric power in all the charging devices of the housing complex), the electric vehicle of the first vehicle group is preferentially charged, and when it is smaller than the predetermined value X2, the electric vehicle of the second vehicle group is preferentially charged. Fig. 7 is a diagram illustrating characteristics of the charging system according to the present embodiment.

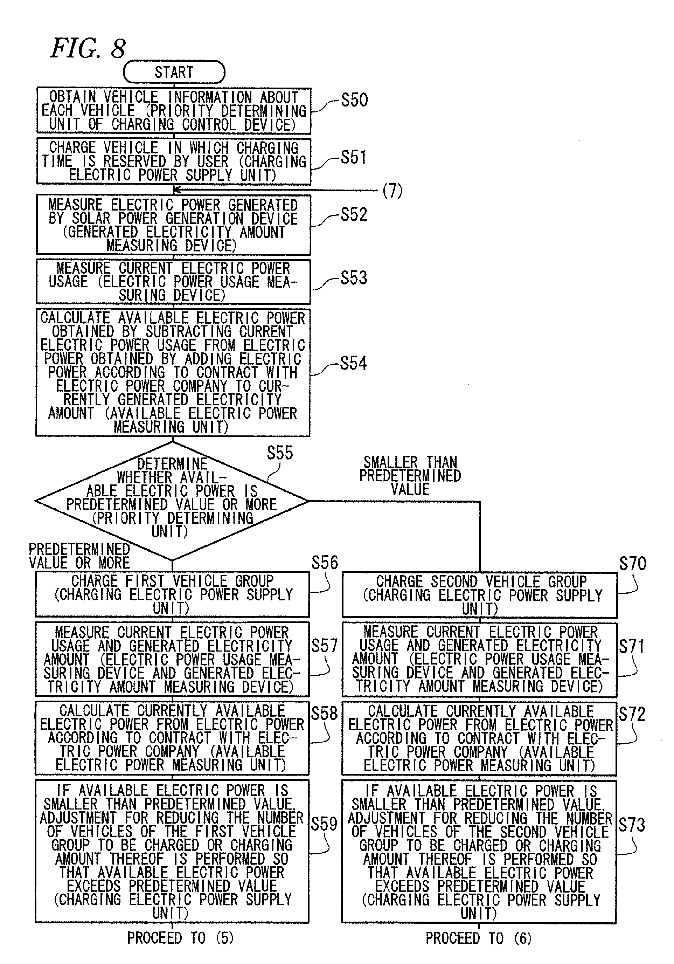

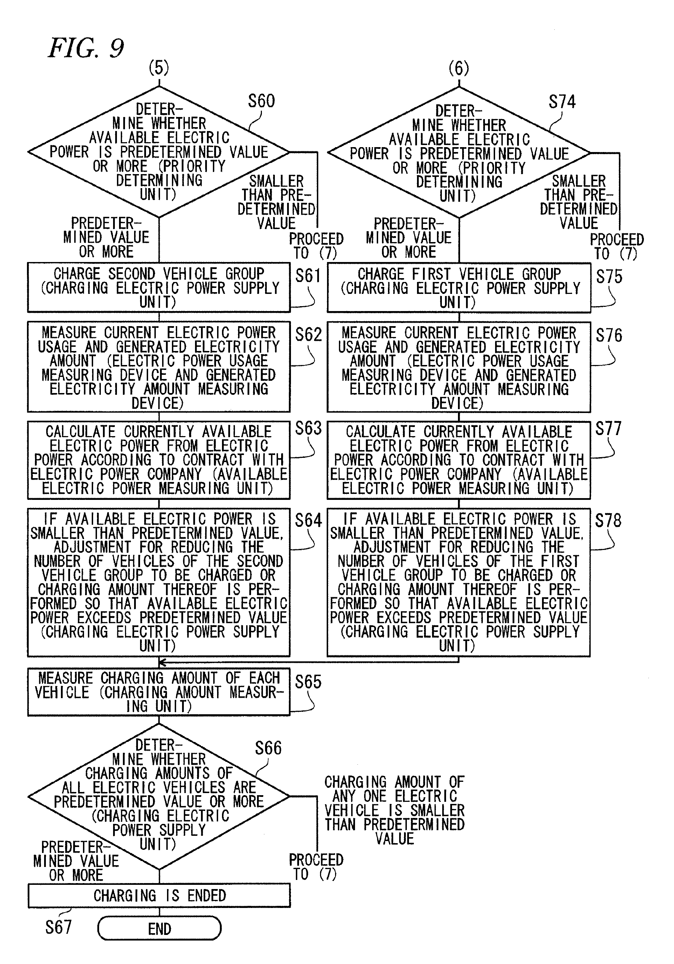

Next, an operation of the charging system 70 according to the present embodiment will be described with reference to flowcharts shown in Figs. 8 and 9. An element (for example, the charging electric power supply unit 33) which performs each step is described together with description of each step. Further, in the operation description, electric power of a solar power generation device is used as the natural energy generation device 200, but wind power generation, geothermal power generation or the like may be used. Further, although not the natural energy generation device, a generation device capable of being installed in the housing complex such as a fuel cell may be used. These devices do not supply constant electric power, and may be changed according to the state of the sun, wind or geothermal heat, or an operation state of the power generation device such as a fuel cell. Available electric power is measured using these circumstances.

Firstly, vehicle information is obtained from each of the N first charging devices 5 and the M second charging devices 6 (step 50, the priority determining unit 32). In this case, the vehicle information is obtained only from the charging device connected to the electric vehicle. After the vehicle information about each electric vehicle is obtained, the electric vehicle in which a charging time is reserved by a user is preferentially charged (step 51, the charging electric power supply unit 33). Then, the electric power generated by the solar power generation device is measured (step 52, the generated electricity amount measuring device 71), and then the current electric power usage is measured (step 53, the electric power usage measuring device 2). Then, available electric power obtained by subtracting the current electric power usage from electric power obtained by adding electric power according to the contract with the electric power company to the generated electricity amount of the current solar power generation device is calculated (step 54, the available electric power measuring unit 31).

Then, it is determined whether the calculated available electric power is a predetermined value X2 or more (for example, 50% or more of the contracted electric power) (step 55, the priority determining unit 32). In a case where the available electric power is the predetermined value X2 or more, the electric vehicle 10 of the first vehicle group is charged prior to the electric vehicle 20 of the second vehicle group (step 56, the charging electric power supply unit 33). When the plurality of electric vehicles of the first vehicle group is parked, the charging is performed in the descending order of usage frequency, in the descending order of travel distance, in the descending order of charging and discharging of the storage battery, or in a similar order in the electric vehicles, over a month or year.

Further, at this time, the current electric power usage and the generated electricity amount are measured (step 57, the electric power usage measuring device 2 and the generated electricity amount measuring device 71), and then the currently available electric power is calculated from the electric power according to the contract with the electric power company (step 58, the available electric power measuring unit 31). Further, if the calculated available electric power is smaller than a predetermined value P11 (for example, smaller than 20% of the contracted available electric power in the entire housing complex, or smaller than 20% of the contracted available electric power in all the charging devices in the housing complex), adjustment for reducing the number of vehicles of the first vehicle group to be charged or the charging amount thereof is performed so that the available electric power becomes the predetermined value P11 or more (step 59, the charging electric power supply unit 33).

Here, in a case where the number of vehicles is reduced, for example, the adjustment is performed to reduce the number of vehicles one by one. After performing the adjustment, it is determined whether the available electric power becomes the predetermined value P11 or more (step 60, the priority determining unit 32). If the available electric power has not yet become the predetermined value P11 or more in this determination, since the available electric power is still small, the procedure returns to step 52, and then the processes of step 52 to step 60 are repeated until the available electric power becomes the predetermined value P11 or more.

In this way, the first vehicle group, that is, the individually owned electric vehicles, is preferentially charged, and the number of vehicles of the first vehicle group to be charged or the charging amount thereof is adjusted so that the available electric power becomes the predetermined value P11 or more. Further, when the available electric power has the margin of the predetermined value P11 or more even though the first vehicle group is preferentially charged, the second vehicle group is charged. If the available electric power is the predetermined value P11 or more, the electric vehicle of the second vehicle group is charged (step 61, the charging electric power supply unit 33).

Further, at this time, the current electric power usage and the generated electricity amount are measured (step 62, the electric power usage measuring device 2 and the generated electricity amount measuring device 71), and then the currently available electric power is calculated from the electric power according to the contract with the electric power company (step 63, the available electric power measuring unit 31). Further, if the calculated available electric power is smaller than a predetermined value P12 (for example, smaller than 20% of the contracted available electric power), adjustment for reducing the number of vehicles of the second vehicle group to be charged or the charging amount thereof is performed so that the available electric power exceeds the predetermined value P12 (step 64, the charging electric power supply unit 33).

Then, the charging amount of each electric vehicle is measured (step 65, the charging amount measuring unit 61), and it is determined whether the charging amounts of all the electric vehicles are a predetermined value Q11 or more (for example, when a full charging state is 100, a minimum necessary charging amount is 80 or more) (step 66, the charging electric power supply unit 33). If the charging amounts of all the electric vehicles are the predetermined value Q11 or more, the charging is ended (step 67, the charging electric power supply unit 33), and if the charging amount of any one electric vehicle is smaller than the predetermined value Q11, the procedure returns to step 52, to repeat the processes of step 52 to step 66.

Thus, when the available electric power has a room of the predetermined value P11 or more even though the first vehicle group is charged, the second vehicle group, that is, the shared electric vehicles are charged. When the plurality of electric vehicles of the second vehicle group is parked, the charging is performed in the descending order of usage frequency, in the descending order of travel distance, in the descending order of charging and discharging of the storage battery, or in a similar order in the electric vehicles, over a month or year.

The number of vehicles of the first and second vehicle groups to be charged or the charging amount thereof is re-adjusted so that the available electric power becomes the predetermined value P12 or more even though the second vehicle group is charged, and then, the charging is ended with the predetermined value Q11 or more.

The predetermined values P11 and P12 are adjusted to become 20% of the contracted electric power in the above description, but may have a range or hysteresis such as 20% to 30%, or may be different from each other (for example, P11<P12), to thereby change the adjustment of the available electric power through charging in the first electric vehicle and the second electric vehicle, thereby enhancing user convenience.

On the other hand, in the determination of step 55, in a case where the available electric power is smaller than the predetermined value X2 (for example, smaller than 50% of the contracted electric power), the electric vehicle 20 of the second vehicle group is preferentially charged prior to the electric vehicle 10 of the first vehicle group (step 70, the charging electric power supply unit 33). Further, at this time, the current electric power usage is measured (step 71, the electric power usage measuring device 2 and the generated electricity amount measuring device 71), and then the available electric power is calculated from the electric power according to the contract with the electric power company (step 72, the available electric power measuring unit 31). Further, if the calculated available electric power is smaller than a predetermined value P13 (for example, smaller than 20% of the contracted electric power), adjustment is performed to reduce the number of cars to be charged in the second vehicle group or the charging amount thereof so that the available electric power becomes the predetermined value P13 or more (step 73, the charging electric power supply unit 33).

Here, in a case where the number of vehicles is reduced, for example, the adjustment is performed to reduce the number of vehicles one by one. After performing the adjustment, it is determined whether the available electric power becomes the predetermined value P13 or more (step 74, the priority determining unit 32). If the available electric power has not yet become the predetermined value P13 or more in this determination, the procedure returns to step 52, and then the processes of step 52 to step 74 are repeated until the available electric power becomes the predetermined value P13 or more.

In this way, the second vehicle group, that is, the shared electric vehicles, is preferentially charged, and the number of vehicles of the first vehicle group to be charged or the charging amount thereof is adjusted so that the available electric power becomes the predetermined value P13 or more. Further, when the available electric power has the margin of the predetermined value P13 or more even though the second vehicle group is preferentially charged, the first vehicle group is charged. If the available electric power P13 is the predetermined value or more, the electric vehicle of the first vehicle group is charged (step 75, the charging electric power supply unit 33).

Further, at this time, the current electric power usage and the generated electricity amount are measured (step 76, the electric power usage measuring device 2 and the generated electricity amount measuring device 71), and then the currently available electric power is calculated from the electric power according to the contract with the electric power company (step 77, the available electric power measuring unit 31). Further, if the calculated available electric power is smaller than a predetermined value P14 (for example, smaller than 20% of the contracted available electric power), adjustment for reducing the number of vehicles of the first vehicle group to be charged or the charging amount thereof is performed so that the available electric power exceeds the predetermined value P14 (step 78, the charging electric power supply unit 33).

Then, the charging amount of each electric vehicle is measured (step 65, the charging amount measuring unit 51), and it is determined whether the charging amounts of all the electric vehicles are a predetermined value Q12 or more (for example, when a full charging state is 100, a minimum necessary charging amount is 80 or more) (step 66, the charging electric power supply unit 33). If the charging amounts of all the electric vehicles are the predetermined value Q12 or more, the charging is ended (step 67, the charging electric power supply unit 33), and if the charging amount of any one electric vehicle is smaller than the predetermined value Q12, the procedure returns to step 52, to repeat the processes of step 52 to step 66.

Thus, when the available electric power has the margin of the predetermined value P13 or more even though the second vehicle group is charged, the first vehicle group, that is, the individually owned electric vehicles, is charged. The number of vehicles of the second and first vehicle groups to be charged or the charging amount thereof is re-adjusted so that the available electric power becomes the predetermined value P14 or more even though the first vehicle group is charged, and then, the charging is ended with the predetermined value Q12 or more.

The predetermined values P13 and P14 are adjusted to become 20% of the contracted electric power in the above description, but may have a range or hysteresis such as 20% to 30%, or may be different from each other (for example, P13<P14), to thereby change the adjustment of the available electric power through charging in the first electric vehicle and the second electric vehicle, thereby enhancing user convenience.

Further, by differentiating the predetermined values P11 from P13, P12 from P14 and Q11 from Q12, the adjustment of the available electric power may be changed through charging when the first electric vehicles are preferentially charged and when the second electric vehicles are preferentially charged, to thereby enhance user convenience.

In this way, according to the charging system 70 of the present embodiment, in a case where the vehicles parked in the parking area are divided into the first vehicle group owned by individuals and the second vehicle group shared by a plurality of persons, the charging system 70 includes the charging control device 3 which charges the electric vehicles of the first vehicle group and the second vehicle group, and the generated electricity amount measuring device 71 which measures electric power generated by the natural energy generation device 200 such as a solar power generation device or a wind power generation device. Further, the charging control device 3 measures the available electric power (including natural energy) for charging the electric vehicles, and preferentially charges the electric vehicle of the first vehicle group if the measured available electric power is the predetermined value or more and preferentially charges the electric vehicle of the second vehicle group if the measured available electric power is smaller than the predetermined value. Thus, when the plurality of parked electric vehicles is charged at the same time, it is possible to perform efficient charging with the limited supplied electric power.

That is, when the electric power generated by the natural energy generation device is large, the individually owned electric vehicle is preferentially charged and prepared so that the resident can use their own vehicle. Further, when the available electric power is small, the shared electric vehicle is preferentially charged and prepared for use even though the individually owned vehicle is not charged and unusable. Rather than the plurality of individually owned vehicles being charged broadly and narrowly for a long time, the shared vehicles are collectively charged for a short time.

### (Third embodiment)

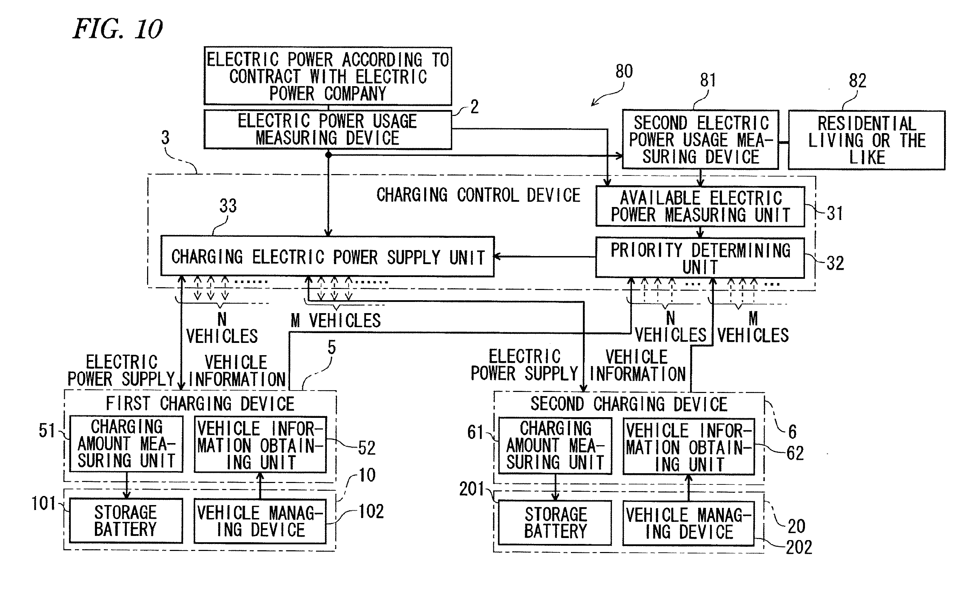

Fig. 10 is a block diagram schematically illustrating a configuration of a charging system according to a third embodiment of the present invention. In the figure, the same reference numerals are given to the same units as in the charging system in Fig. 2, and detailed description thereof will be omitted. Further, in the present embodiment, vehicles parked in a parking area are also divided into a first vehicle group owned by individuals and a second vehicle group shared by a plurality of persons.

A charging system 80 according to the present embodiment includes an electric power usage measuring device 81 which measures usage electric power different from the charging of the first charging device 5 and the second charging device 6, in addition to the electric power usage measuring device 2, the charging control device 3, the first charging device 5 and the second charging device 6. The charging system 80 measures available electric power for charging the electric vehicles, determines the priority of which one of the first vehicle group and the second vehicle group is preferentially charged according to the measured available electric power, and charges the electric vehicles according to the priority.

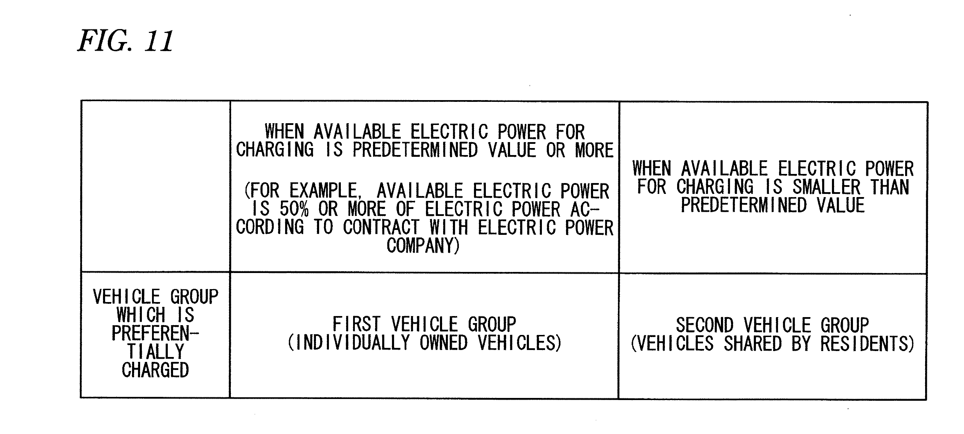

More specifically, when the available electric power for charging is a predetermined value X3 or more (for example, 50% or more of the contracted available electric power in the entire housing complex or 50% or more of the contracted available electric power in all the charging devices of the housing complex), the electric vehicle of the first vehicle group is preferentially charged, and when it is smaller than the predetermined value X3, the electric vehicle of the second vehicle group is preferentially charged. Fig. 11 is a diagram illustrating characteristics of the charging system according to the present embodiment.

The charging system 80 according the present embodiment is different from the charging system 70 according to the above-described second embodiment in that the charging system 80 includes the second electric power usage measuring device 81 which measures electric power used for a residential living 82, common facilities or the like in the housing complex, different from the charging of the electric vehicles, whereas the charging system 70 includes the generated electricity amount measuring device 71 which measures electric power generated by the natural energy generation device such as a solar power generation device or a wind power generation device.

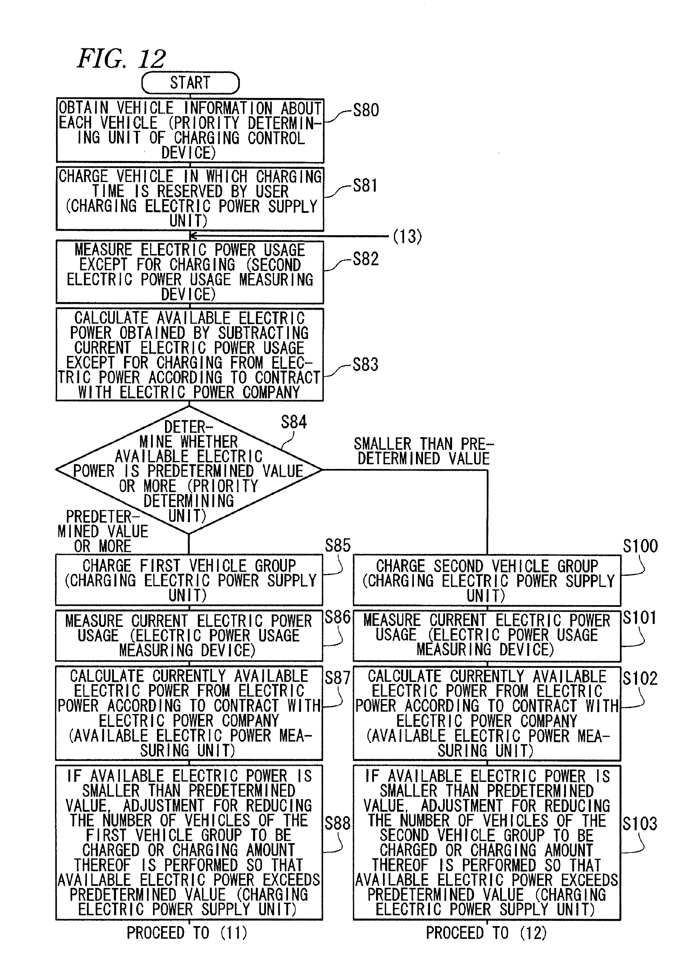

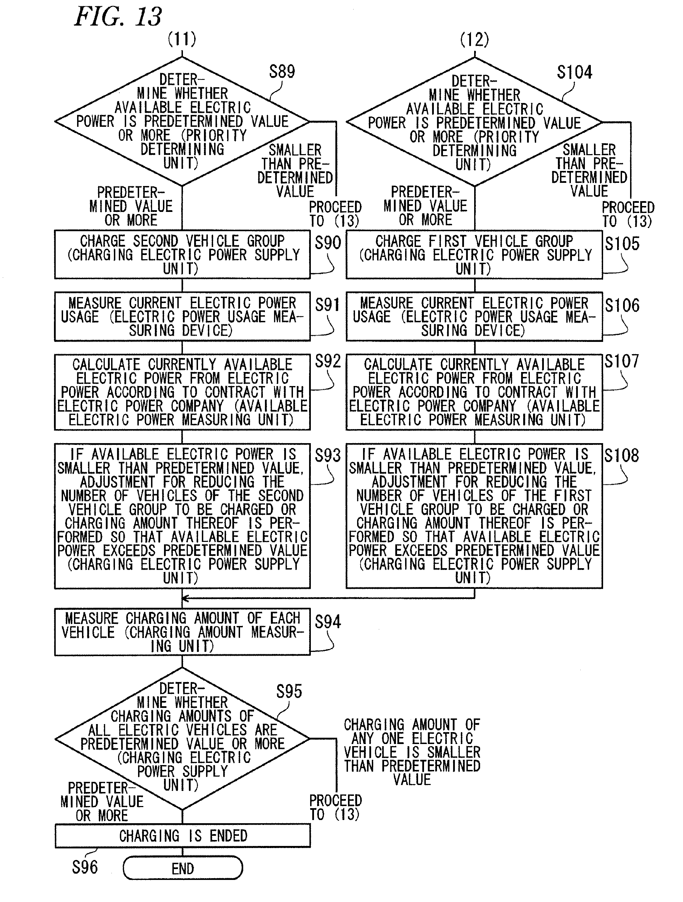

Next, an operation of the charging system 80 according to the present embodiment will be described with reference to flowcharts shown in Figs. 12 and 13. An element (for example, the charging electric power supply unit 33) which performs each step is described together with description of each step.

Firstly, vehicle information is obtained from each of the N first charging devices 5 and the M second charging devices 6 (step 80, the priority determining unit 32). In this case, the vehicle information is obtained only from the charging device connected to the electric vehicle. After the vehicle information about each electric vehicle is obtained, the electric vehicle in which a charging time is reserved by a user is preferentially charged (step 81, the charging electric power supply unit 33). Thus, the individually owned electric vehicle and the shared electric vehicle which are reserved in the charging reservation system of the housing complex are charged.

Next, used available electric power except for the charging is measured (step 82, the second electric power usage measuring device 81), and then available electric power obtained by subtracting the currently used available electric power except for the charging from the electric power according to the contract with the electric power company is calculated (step 83, the available electric power measuring unit 31).

Further, it is determined whether the calculated available electric power is a predetermined value X3 or more (for example, 50% or more of the contracted electric power) (step 84, the priority determining unit 32). In a case where the available electric power is the predetermined value X3 or more, the electric vehicle 10 of the first vehicle group is charged prior to the electric vehicle 20 of the second vehicle group (step 85, the charging electric power supply unit 33). When the plurality of electric vehicles of the first vehicle group is parked, the charging is performed in the descending order of usage frequency, in the descending order of travel distance, in the descending order of charging and discharging of the storage battery, or in a similar order in the electric vehicles, over a month or year.

Further, at this time, the current electric power usage is measured (step 85, the electric power usage measuring unit 2), and then the currently available electric power is calculated from the electric power according to the contract with the electric power company (step 87, the available electric power measuring unit 31). Further, if the calculated available electric power is smaller than a predetermined value P21 (for example, smaller than 20% of the contracted available electric power in the entire housing complex, or smaller than 20% of the contracted available electric power in all the charging devices in the housing complex), adjustment for reducing the number of vehicles of the first vehicle group to be charged or the charging amount thereof is performed so that the available electric power becomes the predetermined value P21 or more (step 88, the charging electric power supply unit 33).

Here, in a case where the number of vehicles is reduced, for example, the adjustment is performed to reduce the number of vehicles one by one. After performing the adjustment, it is determined whether the available electric power becomes the predetermined value P21 or more (step 89, the priority determining unit 32). If the available electric power has not yet become the predetermined value P21 or more in this determination, since the available electric power is still small, the procedure returns to step 82, and then the processes of step 82 to step 89 are repeated until the available electric power becomes the predetermined value P21 or more.

In this way, the first vehicle group, that is, the individually owned electric vehicles are preferentially charged, and the number of vehicles of the first vehicle group to be charged or the charging amount thereof is adjusted so that the available electric power becomes the predetermined value P21 or more.

Further, when the available electric power has the margin of the predetermined value P21 or more even though the first vehicle group is preferentially charged, the second vehicle group is charged. When the plurality of electric vehicles of the second vehicle group is parked, the charging is performed in the descending order of usage frequency, in the descending order of travel distance, in the descending order of charging and discharging of the storage battery, or in a similar order in the electric vehicles, over a month or year.

If the available electric power is the predetermined value P21 or more, the electric vehicle of the second vehicle group is charged (step 90, the charging electric power supply unit 33). Further, at this time, the current electric power usage is measured (step 91, the electric power usage measuring device 2), and then the currently available electric power is calculated from the electric power according to the contract with the electric power company (step 92, the available electric power measuring unit 31).

Further, if the calculated available electric power is smaller than a predetermined value P22 (for example, smaller than 20% of the contracted electric power), adjustment is performed to reduce the number of cars to be charged in the second vehicle group or the charging amount thereof so that the available electric power exceeds the predetermined value P22 (step 93, the charging electric power supply unit 33).

Then, the charging amount of each electric vehicle is measured (step 94, the charging amount measuring unit 61), and it is determined whether the charging amounts of all the electric vehicles are a predetermined value Q21 or more (for example, when a full charging state is 100, a minimum necessary charging amount is 80 or more) (step 95, the charging electric power supply unit 33). If the charging amounts of all the electric vehicles are the predetermined value Q21 or more, the charging is ended (step 96, the charging electric power supply unit 33), and if the charging amount of any one electric vehicle is smaller than the predetermined value Q21, the procedure returns to step 82, to repeat the processes of step 82 to step 95.

Thus, when the available electric power has the margin of the predetermined value P21 or more even though the first vehicle group is charged, the second vehicle group, that is, the shared electric vehicles are charged. The number of vehicles of the first and second vehicle groups to be charged or the charging amount thereof is re-adjusted so that the available electric power becomes the predetermined value P22 or more even though the second vehicle group is charged, and then, the charging is ended with the predetermined value Q21 or more.

The predetermined values P21 and P22 are adjusted to become 20% of the contracted electric power in the above description, but may have a range or hysteresis such as 20% to 30%, or may be different from each other (for example, P21<P22), to thereby change the adjustment of the available electric power through charging in the first electric vehicle and the second electric vehicle, thereby enhancing user convenience.

On the other hand, in the determination of step 84, in a case where the available electric power is smaller than the predetermined value X3 (for example, smaller than 50% of the contracted electric power), the electric vehicle 20 of the second vehicle group is preferentially charged prior to the electric vehicle 10 of the first vehicle group (step 100, the charging electric power supply unit 33).

Further, at this time, the current electric power usage is measured (step 101, the electric power usage measuring device 2), and then the available electric power is calculated from the electric power according to the contract with the electric power company (step 102, the available electric power measuring unit 31). Further, if the calculated available electric power is smaller than a predetermined value P23 (for example, smaller than 20% of the contracted electric power), adjustment is performed to reduce the number of cars to be charged in the second vehicle group or the charging amount thereof so that the available electric power becomes the predetermined value P23 or more (step 103, the charging electric power supply unit 33).

Here, in a case where the number of vehicles is reduced, for example, the adjustment is performed to reduce the number of vehicles one by one. After performing the adjustment, it is determined whether the available electric power becomes the predetermined value or more (step 104, the priority determining unit 32). If the available electric power has not yet become the predetermined value P23 or more in this determination, the procedure returns to step 82, and then the processes of step 82 to step 104 are repeated until the available electric power becomes the predetermined value P23 or more.

In this way, the second vehicle group, that is, the shared electric vehicles are preferentially charged, and the number of vehicles of the first vehicle group to be charged or the charging amount thereof is adjusted so that the available electric power becomes the predetermined value P23 or more. When the available electric power has the margin of the predetermined value P23 or more even though the second vehicle group is preferentially charged, the first vehicle group is charged. If the available electric power is the predetermined value P23 or more, the electric vehicle of the first vehicle group is charged (step 105, the charging electric power supply unit 33).

Further, at this time, the current electric power usage is measured (step 106, the electric power usage measuring device 2), and then the currently available electric power is calculated from the electric power according to the contract with the electric power company (step 107, the available electric power measuring unit 31). Further, if the calculated available electric power is smaller than a predetermined value P24 (for example, smaller than 20% of the contracted available electric power), adjustment for reducing the number of vehicles of the first vehicle group to be charged or the charging amount thereof is performed so that the available electric power exceeds the predetermined value P24 (step 108, the charging electric power supply unit 33).

Further, the charging amount of each electric vehicle is measured (step 94, the charging amount measuring unit 51), and it is determined whether the charging amounts of all the electric vehicles are a predetermined value Q22 or more (for example, when a full charging state is 100, a minimum necessary charging amount is 80 or more) (step 95, the charging electric power supply unit 33). If the charging amounts of all the electric vehicles are the predetermined value Q22 or more, the charging is ended (step 96, the charging electric power supply unit 33), and if the charging amount of any one electric vehicle is smaller than the predetermined value Q22, the procedure returns to step 82, to repeat the processes of step 82 to step 95.

Thus, when the available electric power has the margin of the predetermined value P23 or more even though the second vehicle group is charged, the first vehicle group, that is, the individually owned electric vehicles, is charged. The number of vehicles of the second and first vehicle groups to be charged or the charging amount thereof is re-adjusted so that the available electric power becomes the predetermined value P24 or more even though the first vehicle group is charged, and then, the charging is ended with the predetermined value Q22 or more.

The predetermined values P23 and P24 are adjusted to become 20% of the contracted electric power in the above description, but may have a range or hysteresis such as 20% to 30%, or may be different from each other (for example, P23<P24), to thereby change the adjustment of the available electric power through charging in the first electric vehicle and the second electric vehicle, thereby enhancing user convenience.

Further, by differentiating the predetermined values P21 from P23, P22 from P24 and Q21 from Q22, the adjustment of the available electric power is changed through charging when the first electric vehicles are preferentially charged and when the second electric vehicles are preferentially charged to thereby enhance user convenience.

In this way, according to the charging system 80 of the present embodiment, in a case where the vehicles parked in the parking area are divided into the first vehicle group owned by individuals and the second vehicle group shared by a plurality of persons, the charging system 80 includes the charging control device 3 which charges the electric vehicles of the first vehicle group and the second vehicle group, and the second electric power usage measuring device 81 which measures electric power usage except for charging. Further, the charging control device 3 calculates the available electric power to charge the electric vehicle in which the currently used electric power except for the charging is subtracted, and preferentially charges the electric vehicle of the first vehicle group if the calculated available electric power is the predetermined value or more and preferentially charges the electric vehicle of the second vehicle group if the calculated available electric power is smaller than the predetermined value. Thus, when the plurality of parked electric vehicles is charged at the same time, it is possible to perform efficient charging with the limited supplied electric power.

That is, when the electric power used in the housing complex, except for charging of the electric vehicle, is small and the available electric power is large, the individually owned electric vehicle is preferentially charged and prepared so that the resident can use their own vehicle. Further, when the available electric power is small, the shared electric vehicle is preferentially charged and prepared for use even though the individually owned vehicle is not charged and unusable. Rather than the plurality of individually owned vehicles being charged broadly and narrowly for a long time, shared vehicles are collectively charged for a short time.

In the third embodiment, the charging system 80 may include the natural energy generation device 200 such as a solar power generation device and the generated electricity amount measuring device 71 as in the second embodiment, and the charging control device may calculate the available electric power in a range where this generated electric power and the electric power supplied from the electric power company are added and may control the charging device.

### (Fourth embodiment)

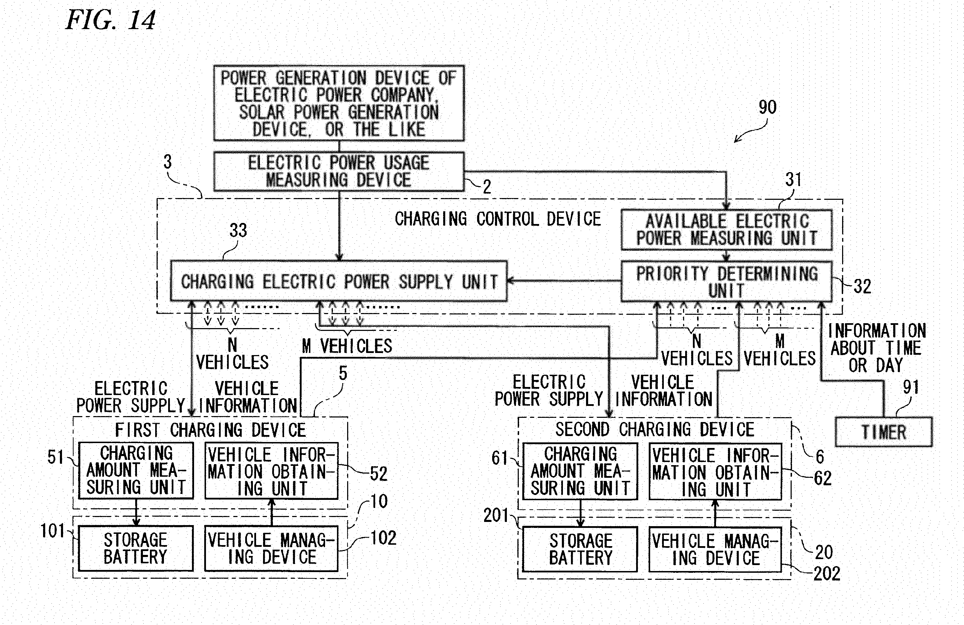

Fig. 14 is a block diagram schematically illustrating a configuration of a charging system according to a fourth embodiment of the present invention. In the figure, the same reference numerals are given to the same units as in the charging system in Fig. 2, and detailed description thereof will be omitted. Further, in the present embodiment, vehicles parked in a parking area are also divided into a first vehicle group owned by individuals and a second vehicle group shared by a plurality of persons.

A charging system 90 according to the present embodiment includes a timer 91 which outputs information about the time or day, in addition to the electric power usage measuring device 2, the charging control device 3, the first charging device 5 and the second charging device 6. The charging system 80 determines the priority of which one of the first vehicle group and the second vehicle group is preferentially charged according to the time or day counted by the timer 91, and charges the electric vehicles according to the priority.

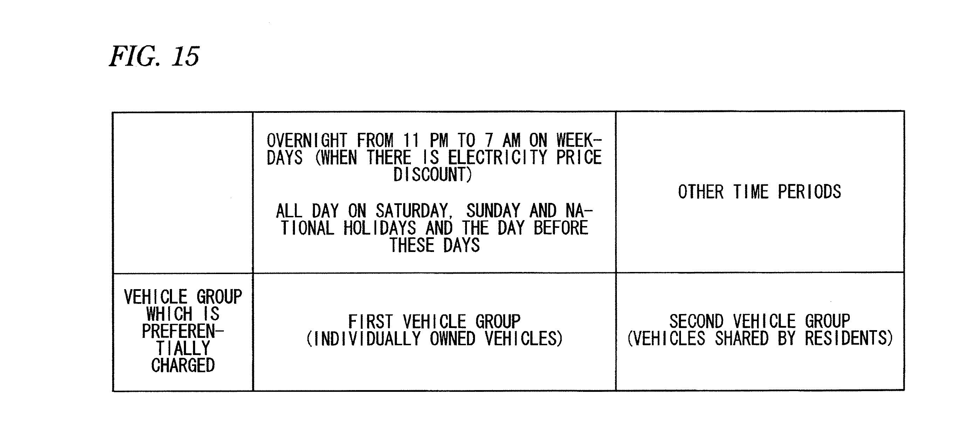

For example, overnight from 11 pm to 7 am on weekdays when there is an electricity price discount, or all day on Saturday, Sunday and national holidays, and the day before these days when the chance of trips using the individually owned vehicles increases, the electric vehicles of the first vehicle group are preferentially charged, and the electric vehicles of the second vehicle group are preferentially charged at other time periods. Fig. 15 is a diagram illustrating characteristics of the charging system according to the present invention.

For example, the electric vehicles of the first group used for commuting are preferentially charged at night, and the electric vehicles of the second group, which are mainly used from the morning to the evening and for which parking and going-out are frequently repeated, are preferentially charged at that time period. In this respect, the timer 91 may count the month or year instead of the time or day, and may determine the priority in consideration of the counted month or year. With regard to the electricity price discount, there is a case where the electricity prices are different between summer (July 1 to September 30 every year) and other seasons during the year. Further, since times of sunrise and sunset may significantly vary between summer and winter, when the ratio of the solar power generation device to the generation device of the electric power company is increased, the time of the electricity price discount may be varied.

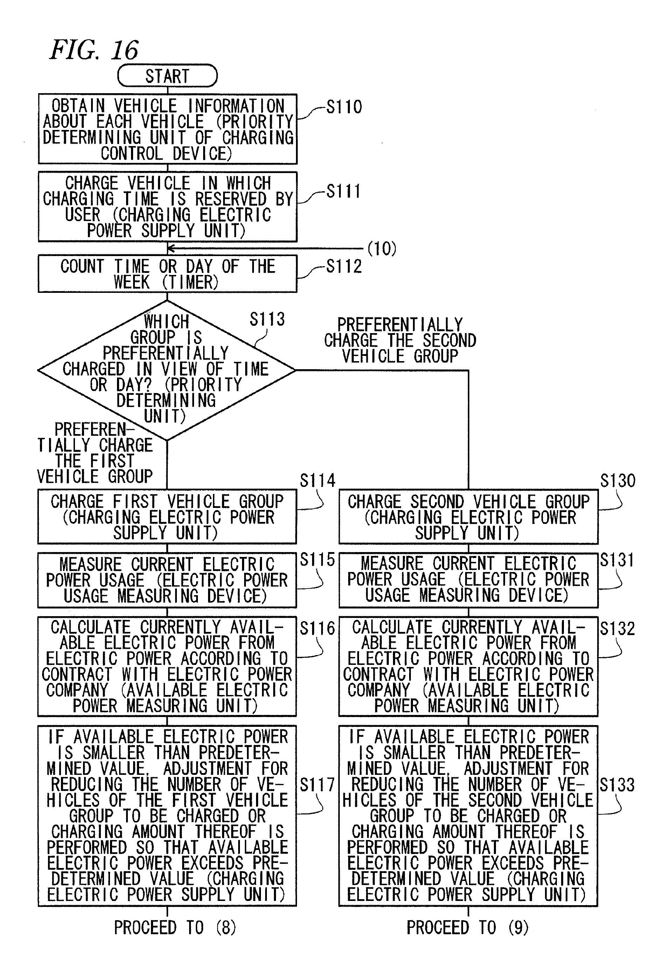

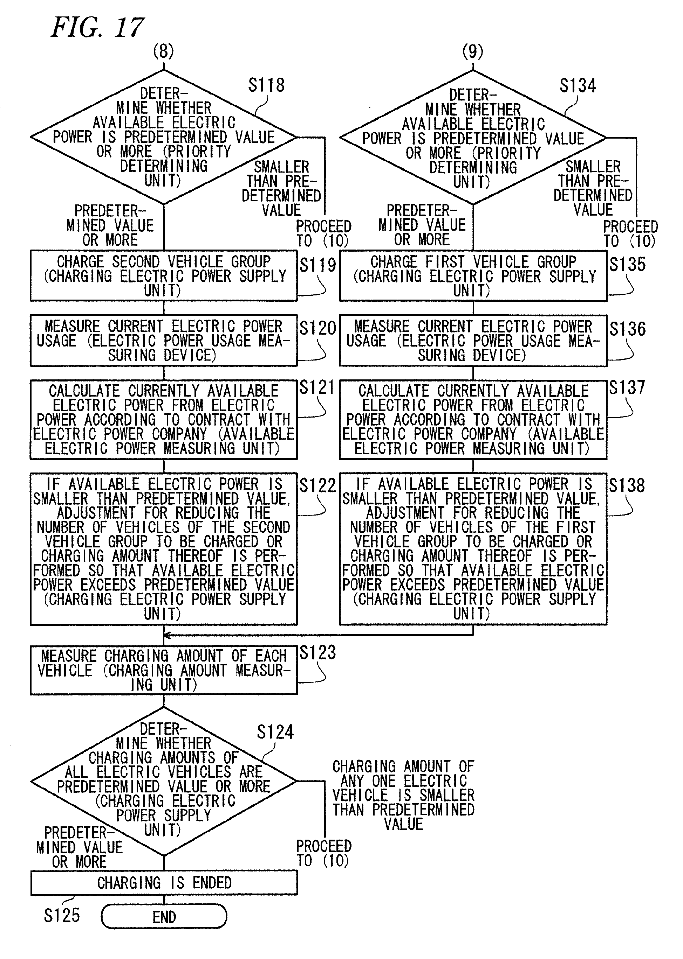

Next, an operation of the charging system 90 according to the present embodiment will be described with reference to flowcharts shown in Figs. 16 and 17. An element (for example, the charging electric power supply unit 33) which performs each step is described together with description of each step.

Firstly, vehicle information is obtained from each of the N first charging devices 5 and the M second charging devices 6 (step 110, the priority determining unit 32). In this case, the vehicle information is obtained only from the charging device connected to the electric vehicle. After the vehicle information about each electric vehicle is obtained, the electric vehicle in which a charging time is reserved by a user is preferentially charged (step 111, the charging electric power supply unit 33). Thus, the individually owned electric vehicle and the shared electric vehicle which are reserved in the charging reservation system of the housing complex are charged.

Next, the time or day is measured (step 112, the timer 91), and then it is determined which group is preferentially charged according to the time or day as described above (step 113, the priority determining unit 32). In a case where the first vehicle group is preferentially charged, the electric vehicle 10 of the first vehicle group is charged prior to the electric vehicle 20 of the second vehicle group (step 114, the charging electric power supply unit 33). When the plurality of electric vehicles of the first vehicle group is parked, the charging is performed in the descending order of usage frequency, in the descending order of travel distance, in the descending order of charging and discharging of the storage battery, or in a similar order in the electric vehicles, over a month or year.

Further, at this time, the current electric power usage is measured (step 115, the electric power usage measuring unit 2), and then the currently available electric power is calculated from the electric power according to the contract with the electric power company (step 116, the available electric power measuring unit 31).

Further, if the calculated available electric power is smaller than a predetermined value P31 (for example, smaller than 20% of the contracted available electric power in the entire housing complex, or smaller than 20% of the contracted available electric power in all the charging devices in the housing complex), adjustment for reducing the number of vehicles of the first vehicle group to be charged or the charging amount thereof is performed so that the available electric power becomes the predetermined value P31 or more (step 117, the charging electric power supply unit 33).

Here, in a case where the number of vehicles is reduced, for example, the adjustment is performed to reduce the number of vehicles one by one. After performing the adjustment, it is determined whether the available electric power becomes the predetermined value P31 or more (step 118, the priority determining unit 32). If the available electric power has not yet become the predetermined value P31 or more in this determination, the procedure returns to step 112, and then the processes of step 112 to step 118 are repeated until the available electric power becomes the predetermined value P31 or more.

In this way, the first vehicle group, that is, the individually owned electric vehicles, is preferentially charged, and the number of vehicles of the first vehicle group to be charged or the charging amount thereof is adjusted so that the available electric power becomes the predetermined value P31 or more. Further, when the available electric power has the margin of the predetermined value P31 or more even though the first vehicle group is preferentially charged, the second vehicle group is charged. When the plurality of electric vehicles of the second vehicle group is parked, the charging is performed in the descending order of usage frequency, in the descending order of travel distance, in the descending order of charging and discharging of the storage battery, or in a similar order in the electric vehicles, over a month or year.

If the available electric power is the predetermined value P31 or more, the electric vehicles of the second vehicle group are charged (step 119, the charging electric power supply unit 33). Further, at this time, the current electric power usage is measured (step 120, the electric power usage measuring unit 2), and then the currently available electric power is calculated from the electric power according to the contract with the electric power company (step 121, the available electric power measuring unit 31).

Further, if the calculated available electric power is smaller than a predetermined value P32 (for example, smaller than 20% of the contracted available electric power), adjustment for reducing the number of vehicles of the second vehicle group to be charged or the charging amount thereof is performed so that the available electric power exceeds the predetermined value (step 122, the charging electric power supply unit 33).

Then, the charging amount of each electric vehicle is measured (step 123, the charging amount measuring unit 61), and it is determined whether the charging amounts of all the electric vehicles are a predetermined value Q31 or more (for example, when a full charging state is 100, a minimum necessary charging amount is 80 or more) (step 124, the charging electric power supply unit 33). If the charging amounts of all the electric vehicles are the predetermined value Q31 or more, the charging is ended (step 125, the charging electric power supply unit 33), and if the charging amount of any one electric vehicle is smaller than the predetermined value Q31, the procedure returns to step 112, to repeat the processes of step 112 to step 125.

Thus, when the available electric power has the margin of the predetermined value P31 or more even though the first vehicle group is charged, the second vehicle group, that is, the shared electric vehicles are charged. The number of vehicles of the first and second vehicle groups to be charged or the charging amount thereof is re-adjusted so that the available electric power becomes the predetermined value P32 or more even though the second vehicle group is charged, and then, the charging is ended with the predetermined value Q31 or more.

The predetermined values P31 and P32 are adjusted to become 20% of the contracted electric power in the above description, but may have a range or hysteresis such as 20% to 30%, or may be different from each other (for example, P31<P32), to thereby change the adjustment of the available electric power through charging in the first electric vehicle and the second electric vehicle, thereby enhancing user convenience.

On the other hand, in the determination of step 113, in a case where the second vehicle group is to be preferentially charged in view of the time or day, the electric vehicle 20 of the second vehicle group is preferentially charged prior to the electric vehicle 10 of the first vehicle group (step 130, the charging electric power supply unit 33).

Further, at this time, the current electric power usage is measured (step 131, the electric power usage measuring device 2), and then the available electric power is calculated from the electric power according to the contract with the electric power company (step 132, the available electric power measuring unit 31). Further, if the calculated available electric power is smaller than a predetermined value P33 (for example, smaller than 20% of the contracted electric power), adjustment is performed to reduce the number of cars to be charged in the second vehicle group or the charging amount thereof so that the available electric power becomes the predetermined value P33 or more (step 133, the charging electric power supply unit 33).

Here, in a case where the number of vehicles is reduced, for example, the adjustment is performed to reduce the number of vehicles one by one. After performing the adjustment, it is determined whether the available electric power becomes the predetermined value P33 or more (step 134, the priority determining unit 32). If the available electric power has not yet become the predetermined value P33 or more in this determination, the procedure returns to step 112, and then the processes of step 112 to step 134 are repeated until the available electric power becomes the predetermined value P33 or more.

In this way, the second vehicle group, that is, the shared electric vehicles, is preferentially charged, and the number of vehicles of the first vehicle group to be charged or the charging amount thereof is adjusted so that the available electric power becomes the predetermined value P33 or more.

Further, when the available electric power has the margin of the predetermined value P33 or more even though the second vehicle group is preferentially charged, the first vehicle group is charged. If the available electric power is the predetermined value P33 or more, the electric vehicle of the first vehicle group is charged (step 135, the charging electric power supply unit 33).

Further, at this time, the current electric power usage is measured (step 136, the electric power usage measuring device 2), and then the currently available electric power is calculated from the electric power according to the contract with the electric power company (step 137, the available electric power measuring unit 31). Subsequently, if the calculated available electric power is smaller than a predetermined value P34 (for example, smaller than 20% of the contracted electric power), adjustment is performed to reduce the number of cars to be charged in the first vehicle group or the charging amount thereof so that the available electric power exceeds the predetermined value P34 (step 138, the charging electric power supply unit 33).

Then, the charging amount of each electric vehicle is measured (step 123, the charging amount measuring unit 51), and it is determined whether the charging amounts of all the electric vehicles are a predetermined value Q32 or more (for example, when a full charging state is 100, a minimum necessary charging amount is 80 or more) (step 124, the charging electric power supply unit 33). If the charging amounts of all the electric vehicles are the predetermined value Q32 or more, the charging is ended (step 125, the charging electric power supply unit 33), and if the charging amount of any one electric vehicle is smaller than the predetermined value Q32, the procedure returns to step 112, to repeat the processes of step 112 to step 124.

Thus, when the available electric power the margin of the predetermined value P33 or more even though the second vehicle group is charged, the first vehicle group, that is, the individually owned electric vehicles are charged. The number of vehicles of the second and first vehicle groups to be charged or the charging amount thereof is re-adjusted so that the available electric power becomes the predetermined value P34 or more even though the first vehicle group is charged, and then, the charging is ended with the predetermined value Q32 or more.

The predetermined values P33 and P34 are adjusted to become 20% of the contracted electric power in the above description, but may have a range or hysteresis such as 20% to 30%, or may be different from each other (for example, P33<P34), to thereby change the adjustment of the available electric power through charging in the first electric vehicle and the second electric vehicle, thereby enhancing user convenience.

Further, by differentiating the predetermined values P31 from P33, P32 from P34 and Q31 from Q32, the adjustment of the available electric power may be changed through charging when the first electric vehicles are preferentially charged and when the second electric vehicles are preferentially charged, to thereby enhance user convenience.

In this way, according to the charging system 90 of the present embodiment, in a case where the vehicles parked in the parking area are divided into the first vehicle group owned by individuals and the second vehicle group shared by a plurality of persons, the charging system 90 includes the charging control device 3 which charges the electric vehicles of the first vehicle group and the second vehicle group, and the timer 91 which counts the time or day. Further, since the charging control device 3 determines the priority of which one of the first vehicle group and the second vehicle group is preferentially charged according to the time or day counted by the timer 91 and charges the electric vehicle according to the priority, when the plurality of parked electric vehicles is charged at the same time, it is possible to perform efficient charging with the limited supplied electric power.

That is, when it is expected that the individually owned electric vehicle will be frequently used or when the electricity rate for charging becomes cheap according to the time or day, the individually owned electric vehicle is preferentially charged and prepared so that the resident can use their own vehicle. Further, when it is expected that the shared electric vehicle will be frequently used for shopping or picking up and dropping off, for example, according to the time or day, the shared electric vehicle is preferentially charged and prepared so that the shared electric vehicle can be used.

Which group of the individually owned vehicles and the shared vehicles is frequently used according to the time or day may be different in different housing complexes. Thus, in an actual operation of the invention, a learning control may be used in which the number of the individually owned vehicles which are away from home and the number of the shared vehicles which are away from home are detected by the parked car number detecting means or the charging device and the result is reflected to the charging control device.

In the fourth embodiment, the charging system 90 may include the natural energy generation device 200 such as a solar power generation device and the generated electricity amount measuring device 71 as in the second embodiment, and the charging device may calculate the available electric power in a range where this generated electric power and the electric power supplied from the electric power company are added and may control the charging device.

Further, in the fourth embodiment, the charging system may include the second electric power usage measuring device 81 as in the third embodiment, and the charging control device may calculate the available electric power in consideration of the electric power used for the residential living 82 or the like, other than the charging system, and may control the control device.

### (Fifth embodiment)

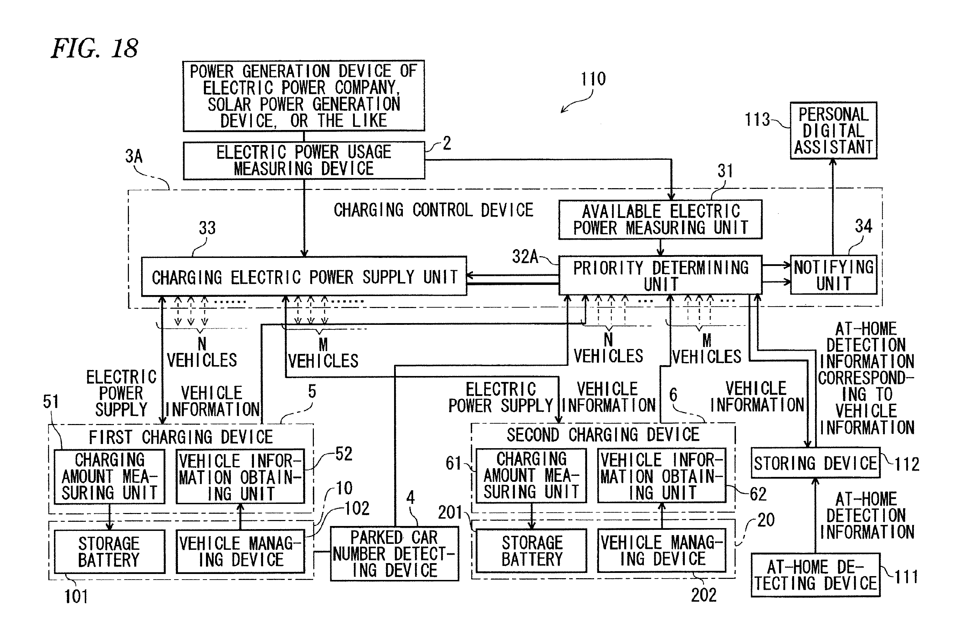

Fig. 18 is a block diagram schematically illustrating a configuration of a charging system according to a fifth embodiment of the present invention. In the figure, the same reference numerals are given to the same units as in the charging system in Fig. 2, and detailed description thereof will be omitted. Further, in the present embodiment, vehicles parked in a parking area are also divided into a first vehicle group owned by individuals and a second vehicle group shared by a plurality of persons.

A charging system 110 according to the present embodiment includes the electric power usage measuring device 2, a charging control device 3A, the first charging device 5, the second charging device 6, an at-home detecting device 111, and a storing device 112, and particularly preferentially charges a vehicle of which the owner is at home, among the individually owned vehicles. That is, the charging system 100 detects an at-home state of an owner of each electric vehicle in the first vehicle group, correspondingly stores the detection result and vehicle information about the electric vehicle of the owner, checks vehicle information obtained from the electric vehicle to be charged with the stored vehicle information when the first vehicle group is charged, obtains the at-home detection result corresponding to the vehicle information in a case where the corresponding vehicle information is present and preferentially charges the electric vehicle of which the owner is at home more preferentially than the electric vehicle of which the owner is not at home.

The charging control device 3A includes the available electric power measuring unit 31, a priority determining unit 32A, the charging electric power supply unit 33, and a notifying unit 34. The notifying unit 34 transmits information from the priority determining unit 32A toward a mobile information terminal (for example, mobile phone) carried by an owner, a personal computer, a home TV or a display device 113. From the notifying unit 34, the "charging amount of the vehicle of the owner", the "priority of the current charging", the "recommendation for use of the second vehicle group", or the like is transmitted.

The at-home detecting device 111 detects the at-home state of each owner, and then gives the at-home detection information to the storing device 112. For example, the at-home detecting device 111 detects whether or not each owner is at home by associating with an at-home or going-out setting of a home security system, by detecting a usage state of infrastructure for living such as electric power, piped water or gas, by detecting an operation state of electrical household appliances such as lighting, air conditioning, television, heated toilet seat appliances or boilers, or by detecting a setting of door locking or an answering mode of an answer phone.

The storing device 112 includes a non-volatile memory such as a flash memory, and correspondingly stores the vehicle information given from the priority determining unit 32A and the at-home result (at-home detection information) of the vehicle owner of the corresponding vehicle information. When the first vehicle group is charged, the priority determining unit 32A checks vehicle information obtained from the electric vehicle to be charged with the vehicle information stored in the storing device 112, and obtains, in a case where the corresponding vehicle is present, the detection result of the at-home detecting device 111 corresponding to the vehicle information and determines to accord the electric vehicle of which the owner is at home the priority over the electric vehicle of which the owner is not at home.

Which one of the first vehicle group (individually owned electric vehicles) and the second vehicle group (electric vehicles shared by the residents) is preferentially charged may be determined by any one of the methods according to the first to fourth embodiments or a combination of the first to third embodiments. The present embodiment is combined with the first embodiment as shown in Fig. 18.

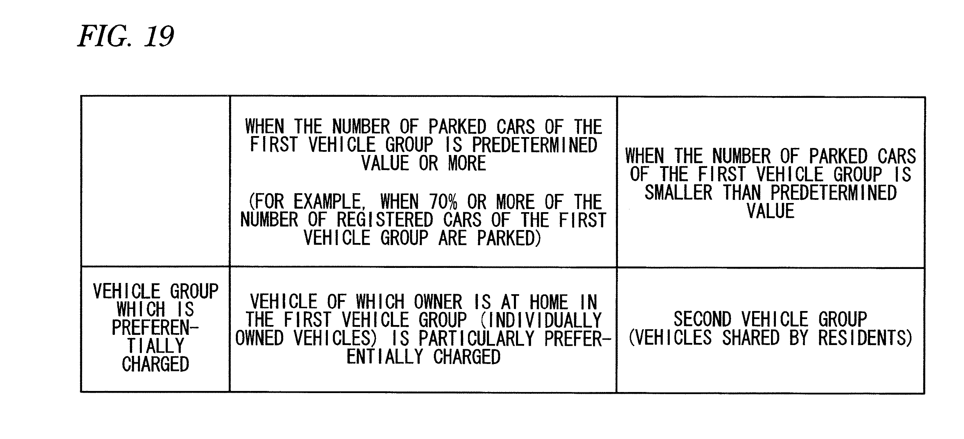

Fig. 19 is a diagram illustrating characteristics of a charging system 110 according to the present embodiment in a case where the method of the first embodiment is used. That is, when the number of parked cars of the first vehicle group is the predetermined value X1 or more (for example, when 70% or more of the number of registered cars of the first vehicle group are parked), the first vehicle group is preferentially charged, and when the number of parked cars of the first vehicle group is smaller than the predetermined value X1, the second vehicle group is preferentially charged. As described above, in the present embodiment, the vehicle of which the owner is at home in the first vehicle group is particularly preferentially charged.

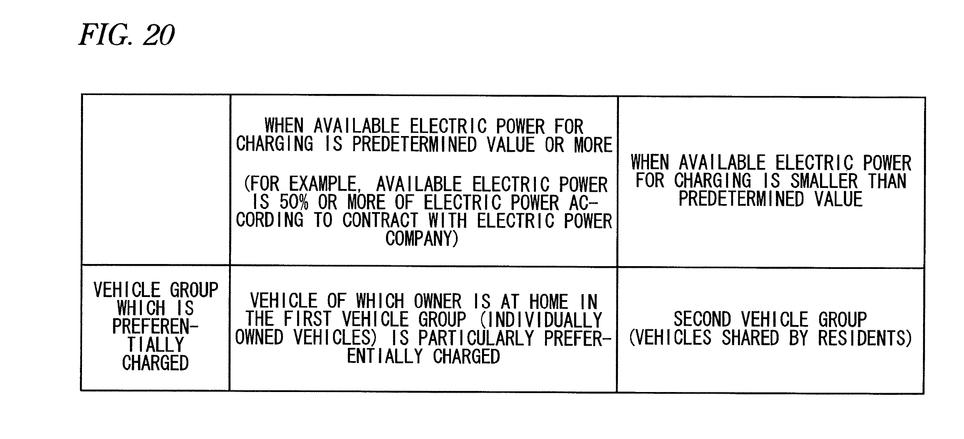

Fig. 20 is a diagram illustrating characteristics of the charging system 110 in a case where the method of the second embodiment or the third embodiment is used. That is, when the available electric power for charging is the predetermined value X2 or X3 or more (for example, 50% or more of the contracted available electric power in the entire housing complex or 50% or more of the contracted available electric power in all the charging devices of the housing complex), the first vehicle group is preferentially charged, and when the available electric power for charging is smaller than the predetermined value X2 or X3, the second vehicle group is preferentially charged.

That is, the charging system 110 may include the natural energy generation device 200 such as a solar power generation device and the generated electricity amount measuring device 71 as in the second embodiment, and the charging control device may calculate the available electric power in a range where this generated electric power and the electric power supplied from the electric power company are added and may control the charging device.

Further, the charging system 110 may include the second electric power usage measuring device 81 as in the third embodiment, and the charging control device may calculate the available electric power in consideration of the electric power used for the residential living 82 or the like, other than the charging system, and may control the control device.

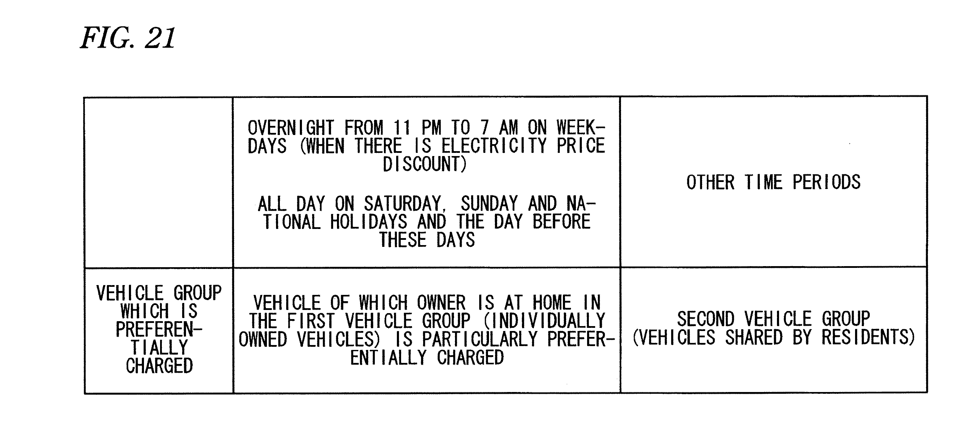

Fig. 21 is a diagram illustrating characteristics of the charging system 110 in a case where the method of the fourth embodiment is used. That is, the first vehicle group is preferentially charged overnight from 11 pm to 7 am on weekdays when there is an electricity price discount, or all day on Saturday, Sunday and national holidays, and the day before these days, and the second vehicle group is preferentially charged in other time periods.

That is, the charging system 110 includes the timer 91 as in the fourth embodiment, and the charging control device controls the charging device according to information about the time or day.

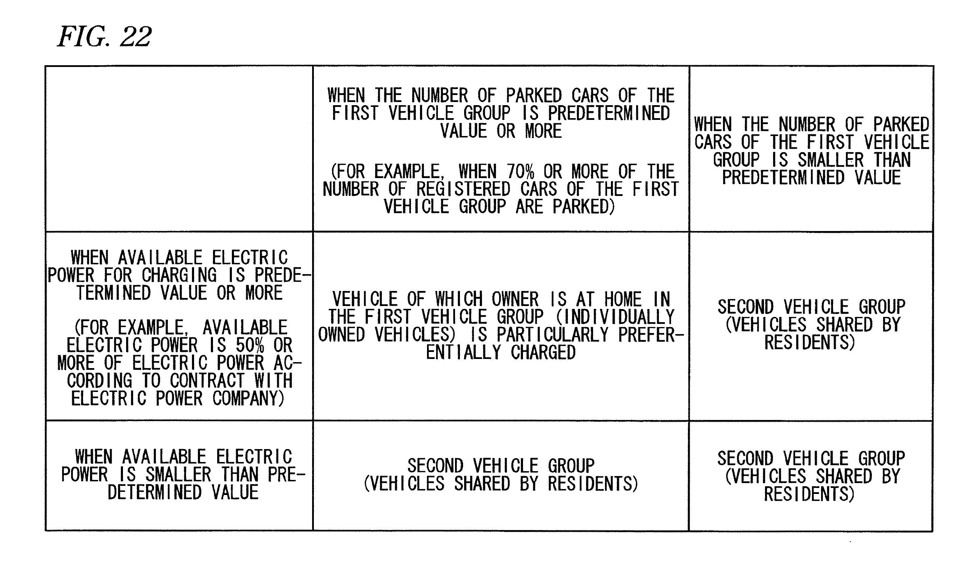

Fig. 22 is a diagram illustrating characteristics of the charging system 110 in a case where the respective methods of the first, second and third embodiments are combined. That is, when the number of parked cars of the first vehicle group is the predetermined value X1 or more (for example, when 70% or more of the number of registered cars of the first vehicle group are parked) and the available electric power for charging is the predetermined value X2 or X3 or more (for example, 50% or more of the contracted available electric power in the entire housing complex or 50% or more of the contracted available electric power in all the charging devices of the housing complex), the first vehicle group is preferentially charged, and when the available electric power for charging is smaller than the predetermined value X2, the second vehicle group is preferentially charged. Further, when the number of parked cars of the first vehicle group is smaller than the predetermined value X1, the second vehicle group is preferentially charged regardless of whether the available electric power for charging is the predetermined value X2 or X3 or more, or smaller than predetermined value X2 or X3.

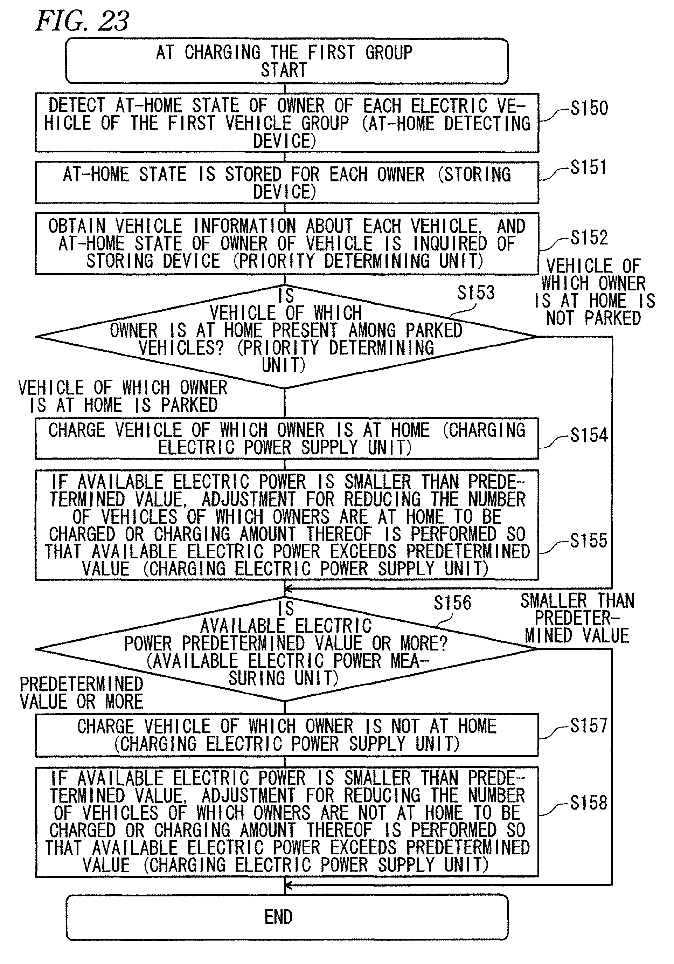

Next, an operation of the charging system 110 according to the present embodiment when the first vehicle group is charged will be described with reference to a flowchart shown in Fig. 23. An element (for example, the charging electric power supply unit 33) which performs each step is described together with description of each step.

Firstly, the at-home state of the owner of each electric vehicle in the first vehicle group is detected at regular intervals (for example, 15 minute intervals) (step 150, the at-home detecting device 111), and the at-home state is stored for each owner (step 151, the storing device 112). Alternatively, when the at-home state is changed, the at-home state may be stored for each owner. Further, vehicle information about each vehicle is obtained, and the at-home state of the owner of the vehicle is inquired of the storing device 112 (step 152, the priority determining unit 32A). Further, it is determined whether a vehicle of which the owner is at home is present among the parked vehicles (step 153, the priority determining unit 32A), and in a case where the vehicle of which the owner is at home is present, the vehicle of the first vehicle group of which the owner is at home is preferentially charged (step 154, the charging electric power supply unit 33). When the plurality of electric vehicles of the first vehicle group of which the owners are at home is parked, the charging is performed in the descending order of usage frequency, in the descending order of travel distance, in the descending order of charging and discharging of the storage battery, or in a similar order in the electric vehicles, over a month or year.

At this time, if the available electric power is smaller than a predetermined value P41 (for example, smaller than 20% of the contracted electric power), adjustment for reducing the number of vehicles of which the owners are at home to be charged or the charging amount thereof is performed so that the available electric power becomes the predetermined value P41 or more (step 155, the charging electric power supply unit 33).

Here, in a case where the number of vehicles is reduced, for example, the adjustment is performed to reduce the number of vehicles one by one. After performing the adjustment, it is determined whether the available electric power becomes the predetermined value P42 or more (for example, 20% or more of the contracted power) (step 156, the available electric power measuring unit 31). If the available electric power is smaller than the predetermined value P42, the process is ended, and if the available electric power is the predetermined value P42 or more, the vehicle of the first vehicle group of which the owner is not at home is charged (step 157, the charging electric power supply unit 33). When the plurality of electric vehicles of the first vehicle group of which the owners are at home is parked, the charging is performed in the descending order of usage frequency, in the descending order of travel distance, in the descending order of charging and discharging of the storage battery, or in a similar order in the electric vehicles, over a month or year.

At this time, if the available electric power is smaller than a predetermined value P42, adjustment for reducing the number of vehicles of which the owners are not at home to be charged or the charging amount thereof is performed so that the available electric power becomes the predetermined value P42 or more (step 158, the charging electric power supply unit 33).

In step 153, in a case where the vehicle of which the owner is not at home is not present among the parked vehicles of the first vehicle group, the procedure directly goes to step 156.

The procedure of the flowchart in Fig. 23 as described above is performed when the first vehicle group is charged in the first to fourth embodiments (step 14, step 35, step 56, step 75, step 85, step 105, step 114 and step 135).

The predetermined values P41 and P42 are adjusted to become 20% of the contracted electric power in the above description, but may have a range or hysteresis such as 20% to 30%, or may be different from each other (for example, P41<P42), to thereby change the adjustment of the available electric power through charging in the electric vehicle of which the owner is at home and the electric vehicle of which the owner is not at home in the first vehicle group, thereby enhancing user convenience.

In this way, according to the charging system 110 of the present embodiment, in a case where the vehicles parked in the parking area are divided into the first vehicle group owned by individuals and the second vehicle group shared by a plurality of persons, the charging system 110 includes the at-home state detecting device 111 which detects the at-home state of the owner of each electric vehicle of the first vehicle group, and the storing device 112 which correspondingly stores the detection result of the at-home state detecting device 111 and the vehicle information about the electric vehicle of the owner. When the first vehicle group is charged, the charging control device 3A checks the vehicle information obtained from the electric vehicle to be charged with the vehicle information stored in the storing device 112, and obtains, in a case where the corresponding vehicle is present, the detection result of the at-home detecting device 111 corresponding to the vehicle information. Further, the electric vehicle of which the owner is at home is charged more preferentially than the electric vehicle of which the owner is not at home. Thus, when the plurality of parked electric vehicles is charged at the same time, it is possible to perform efficient charging with the limited supplied electric power.

That is, since a vehicle having a high usability is preferentially charged when the individually owned vehicles are charged, the at-home state of the owner is detected, and the electric vehicle of which the owner who is at home is preferentially charged. Subsequently, since the electric vehicle of the owner who is not at home is charged, it is possible to charge the vehicle of the owner who is away from home without using the individually owned vehicle.

Although not shown, the charging priority may be determined in the order of the electric vehicles of individuals who are at home (first vehicle group), the shared electric vehicles (second vehicle group), and the electric vehicles of the individuals who are not at home (first vehicle group), or may be determined in the order of the shared electric vehicles (second vehicle group), the electric vehicles of individuals who are at home (first vehicle group), and the electric vehicles of the individuals who are not at home (first vehicle group), according to the at-home state of the owners of the parked individually owned electric vehicles, using the charging system 110 according to the present embodiment.

Further, the charging system 110 includes the notifying unit 34 which performs notification to the owner of the electric vehicle of the first electric vehicle group, and notifies, in a case where the electric vehicle of the second vehicle group is charged more preferentially than the first vehicle group, that the second vehicle group is usable using the notifying unit 34. Thus, the owner of the electric vehicle in the first vehicle group can find that the second vehicle group (shared vehicle) is completely charged and usable even though their own electric vehicle is not yet charged, for example.

For example, when the second vehicle group is preferentially charged in Figs. 19, 20, 21, and 22, the first vehicle group may not be sufficiently charged. That is, in a case where a resident desires to use their own electric vehicle, the charging amount thereof is not sufficient, thereby making it difficult to provide a sufficient travel distance. In such a case, as described above, the resident may input a time period when the individually owned electric vehicle is to be used and a necessary travel distance using the charging reservation system of the housing complex, to reserve charging of their own electric vehicle to be most preferentially charged. Nevertheless, in a case where a long time is necessary for the charging, the charging may not be performed in time.

Thus, since the charging reservation system is associated with the car sharing management system, the conditions of the time period when the resident desires to use the vehicle and the necessary travel distance may be used for search of the shared vehicles of the car sharing management system. In consideration of the time period when the individually owned electric vehicle is to be used and the necessary travel distance, when the shared vehicle can provide the necessary travel distance and is usable in the time period, it is notified to the resident that the shared vehicle is usable, using the notifying unit 34, a car-mounted terminal, a personal computer or a mobile phone.

Further, as described above, regardless of the association with the charging reservation system or the car sharing management system, as shown in Fig. 20 or Fig. 22, when electric power available for charging the electric vehicle is limited and the second vehicle group is preferentially charted, and when the charging of the second vehicle group is preferentially completed, it may be notified to the resident that the shared vehicle is usable.

When the number of the individually owned vehicles to be charged is relatively large compared with the available electric power for charging, it is possible to perform efficient charging by guiding the residents to use the shared vehicles. When the usage of the shared vehicles is notified to the residents and is facilitated in this way, the efficient charging is achieved, and thus, the car sharing management system may reduce the usage fee (for example, fee per hour or travel distance) of the sharing vehicle more cheaply than usual or may provide privileges such as a coupon or points.

The invention has been described in detail with reference to the specific embodiments, but it is clear to those skilled in the art that a variety of modifications can be made without departing from the spirit and range of the invention.

The present application is based on Japanese Patent Application No. 2009-298751 filed on December 28, 2009, the content of which is incorporated herein.

### Industrial Applicability

According to the invention, when the plurality of parked electric vehicles is charged at the same time, it is possible to perform efficient charging with the limited supplied electric power. Further, the invention can be applied to parking facilities which can provide car sharing.

Further, the charging control of the individually owned vehicles and the shared vehicles in the housing complex has been described in the embodiments, but the invention is effective when individually owned electric vehicles and shared electric vehicles are mixedly charged, for example, for a charging control of individually owned vehicles and shared vehicles in common parking areas, commercial facilities or public facilities, and for a charging control of corporation owned vehicles and shared vehicles in companies.

Further, the electric vehicle is not limited to automobiles, and may include vehicles which should be charged using storage batteries, such as electric bicycles, two-wheeled electric vehicles, power-operated chairs, four-wheeled electric vehicles, electric agricultural machines, or electric carrier used in factories, warehouses or the like, and the invention is effective in parking areas of those vehicles.

### Description of Reference Signs

- 1, 70, 80, 90, 110, 401: CHARGING SYSTEM
- 2: ELECTRIC POWER USAGE MEASURING DEVICE
- 3, 3A, 406: CHARGING CONTROL DEVICE
- 4: PARKED CAR NUMBER DETECTING DEVICE
- 5, 405: FIRST CHARGING DEVICE
- 6, 404: SECOND CHARGING DEVICE
- 10, 20: ELECTRIC VEHICLE
- 31: AVAILABLE ELECTRIC POWER MEASURING UNIT
- 32, 32A: PRIORITY DETERMINING UNIT
- 33: CHARGING ELECTRIC POWER SUPPLY UNIT
- 34: NOTIFYING UNIT
- 51, 61: CHARGING AMOUNT MEASURING UNIT
- 52, 62: VEHICLE INFORMATION OBTAINING UNIT
- 71: GENERATED ELECTRICITY AMOUNT MEASURING DEVICE
- 81: SECOND ELECTRIC POWER USAGE MEASURING DEVICE
- 82: RESIDENCE OR THE LIKE
- 91: TIMER
- 101,201: STORAGE BATTERY
- 102, 202: VEHICLE MANAGING DEVICE
- 111: AT-HOME DETECTING DEVICE
- 112: STORING DEVICE
- 113: PERSONAL DIGITAL ASSISTANT
- 200: NATURAL ENERGY POWER GENERATION DEVICE
- 402: ELECTRIC POWER COMPANY
- 403: SOLAR POWER GENERATION DEVICE

## Claims

1. A charging system comprising:
parked car number detecting means for, in a case where vehicles parked in a parking area are divided into a first vehicle group owned by an individual and a second vehicle group shared by a plurality of persons, detecting the number of parked cars or a parking rate of the first vehicle group; and
a charging control device configured to charge electric vehicles in the first vehicle group and the second vehicle group,
wherein the charging control device comprises:
priority determining means for determining the priority of which one of the first vehicle group and the second vehicle group is preferentially charged according to the number of parked cars or the parking rate detected by the parked car number detecting means; and
charging electric power supplying means for charging the electric vehicles according to the priority determined by the priority determining means.

2. The charging system according to claim 1,
wherein the priority determining means preferentially charges the electric vehicles of the first vehicle group when the number of parked cars or the parking rate of the first vehicle group detected by the parked car number detecting means is a predetermined value or more, and preferentially charges the electric vehicles of the second vehicle group when the number of parked cars or the parking rate of the first vehicle group is smaller than the predetermined value.

3. A charging system comprising:
a charging control device configured, in a case where vehicles parked in a parking area is divided into a first vehicle group owned by an individual and a second vehicle group shared by a plurality of persons, to charge electric vehicles in the first vehicle group and the second vehicle group,
wherein charging control device comprises:
available electric power measuring means for measuring electric power available for charging the electric vehicles;
priority determining means for determining the priority of which one of the first vehicle group and the second vehicle group is preferentially charged according to the available electric power measured by the available electric power measuring means; and
charging electric power supplying means for charging the electric vehicles according to the priority determined by the priority determining means.

4. The charging system according to claim 3:
wherein the priority determining means preferentially charges the electric vehicles of the first vehicle group when the available electric power measured by the available electric power measuring means is a predetermined value or more, and preferentially charges the electric vehicles of the second vehicle group when the available electric power measured by the available electric power measuring means is smaller than the predetermined value.

5. A charging system comprising:
a charging control device configured, in a case where vehicles parked in a parking area are divided into a first vehicle group owned by an individual and a second vehicle group shared by a plurality of persons, to charge electric vehicles in the first vehicle group and the second vehicle group; and
timer means for counting the time or day,
wherein charging control device comprises:
priority determining means for determining the priority of which one of the first vehicle group and the second vehicle group is preferentially charged according to the time or day counted by the timer means; and
charging electric power supplying means for charging the electric vehicles according to the priority determined by the priority determining means.

6. The charging system according to any one of claims 1 to 5, further comprising:
at-home detecting means for detecting an at-home state of an owner for each electric vehicle of the first vehicle group,
wherein the priority determining means charges the electric vehicle of which the owner is at home more preferentially than the electric vehicle of which the owner is not at home.

7. The charging system according to claim 6, further comprising:
storage means for storing a detection result of the at-home detecting means in association with vehicle information on the electric vehicle of the owner,
wherein when the first vehicle group is being charged, the priority determining means checks vehicle information obtained from the electric vehicle to be charged with the vehicle information stored in the storage means, obtains the detection result of the at-home detecting means corresponding to the vehicle information in a case where the corresponding vehicle information is present, and charges the electric vehicle of which the owner is at home more preferentially than the electric vehicle of which the owner is not at home.

8. The charging system according to any one of claims 1 to 7,
wherein the charging control device comprises notifying means for notifying the owner of the electric vehicle of the first electric vehicle group, and
wherein the priority determining means performs notification of availability of the second vehicle group using the notifying means when the electric vehicle of the second vehicle group is charged more preferentially than the first vehicle group.

9. A method for controlling a charging system that comprises: parked car number detecting means for, in a case where vehicles parked in a parking area are divided into a first vehicle group owned by an individual and a second vehicle group shared by a plurality of persons, detecting the number of parked cars or a parking rate of the first vehicle group; and a charging control device configured to charge electric vehicles in the first vehicle group and the second vehicle group, said method comprising:
a priority determining step of determining the priority of which one of the first vehicle group and the second vehicle group is preferentially charged according to the number of the parked cars or the parking rate detected by the parked car number detecting means; and
a charging electric power supplying step of charging the electric vehicles according to the priority determined in the priority determining step.

10. A program for causing a computer to execute the method for controlling the charging system according to claim 9.
